# EUROPÄISCHE PATENTSCHRIFT

(11) **EP 3 146 829 B1**
(45) Veröffentlichungstag und Bekanntmachung des Hinweises auf die Patenterteilung: **19.12.2018**
(21) Anmeldenummer: 16185897.2
(22) Anmeldetag: 26.08.2016
(51) Int. Cl.: A01D 34/00, A01D 69/02, B60K 1/04, B60K 1/00

(54) **BODENBEARBEITUNGSGERÄTEVORRICHTUNG UND VERFAHREN ZUM BETRIEB EINER BODENBEARBEITUNGSGERÄTEVORRICHTUNG**
SOIL PROCESSING DEVICE AND METHOD FOR OPERATING A SOIL PROCESSING DEVICE
DISPOSITIF DE TRAVAIL DU SOL ET PROCEDE DE FONCTIONNEMENT D'UN DISPOSITIF DE TRAVAIL DU SOL

(30) Priorität: 28.09.2015 DE 102015218540
(43) Veröffentlichungstag der Anmeldung: 29.03.2017
(73) Patentinhaber: ROBERT BOSCH GMBH, 70442 Stuttgart (DE)
(72) Erfinder: Tonks, Philip, Stowmarket IP14 (GB); Reynolds, Dave, Bury St. Edmunds (GB); Armstrong, Gavin Ben, Tostock Suffork IP309GH (GB)

(56) Entgegenhaltungen:
- EP-A1- 2 656 719
- CN-A- 105 432 212
- US-A1- 2003 037 525
- US-B1- 8 191 343

## Beschreibung

### Stand der Technik

Es ist bereits ein, insbesondere als Rasenmäher ausgebildetes, Bodenbearbeitungsgerät vorgeschlagen worden, welches zumindest einen Akkumulator und zumindest ein drehbar antreibbares Bearbeitungswerkzeug umfasst, wobei ein von dem Bearbeitungswerkzeug erzeugter Luftstrom zum Sammeln von Schnittgut verwendet wird. Documente US 2003/037525, EP2656719, US8191343, und CN105432212 beschreiben ähnliche Bodenverarbeitungsgerätevorrichtungen.

### Offenbarung der Erfindung

Die Erfindung geht aus von einer Bodenbearbeitungsgerätevorrichtung gemäß Anspruch 1. Weitere optionale Merkmale der Erfindung sind in den Unteransprüchen beschrieben.

Unter einer "Bodenbearbeitungsgerätevorrichtung" soll in diesem Zusammenhang insbesondere zumindest ein Teil, insbesondere eine Unterbaugruppe, eines Bodenbearbeitungsgeräts, insbesondere eines autonomen Bodenbearbeitungsgeräts, verstanden werden. Insbesondere kann die Bodenbearbeitungsgerätevorrichtung auch das gesamte Bodenbearbeitungsgerät, insbesondere das gesamte autonome Bodenbearbeitungsgerät, umfassen. Unter einem "Bodenbearbeitungsgerät" soll in diesem Zusammenhang insbesondere ein Gerät verstanden werden, welches insbesondere mittels der Bearbeitungseinheit, vorteilhaft direkt, zu einer Bearbeitung eines Bodens und/oder eines Untergrunds vorgesehen ist und/oder welches zu einer Bearbeitung eines bodennahen Bereichs und/oder zu einer Bearbeitung in Bodennähe vorgesehen ist. Besonders bevorzugt kann ein Bodenbearbeitungsgerät dabei beispielsweise als Staubsauger, als Kehrmaschine, als Reinigungsmaschine, als Eisbearbeitungsmaschine, als Vertikutierer, als, insbesondere handgehaltener, Rasentrimmer und/oder vorteilhaft als Rasenmäher ausgebildet sein. Des Weiteren soll in diesem Zusammenhang unter einem "autonomen Bodenbearbeitungsgerät" insbesondere ein Gerät verstanden werden, welches eine Arbeit zumindest teilweise selbsttätig verrichtet, wie insbesondere selbsttätig beginnt, selbsttätig beendet und/oder selbsttätig zumindest einen Parameter, wie beispielsweise einen Streckenparameter und/oder einen Umkehrpunkt, auswählt und/oder sich, vorteilhaft zumindest zur Verrichtung einer Arbeit, selbsttätig und/oder autonom in einem vorgegeben Arbeitsbereich bewegt. Insbesondere kann die Bodenbearbeitungsgerätevorrichtung dabei zumindest ein, vorteilhaft als Außengehäuse ausgebildetes, Gerätegehäuse, zumindest eine, insbesondere auf einer Unterseite und/oder auf einer einem Boden zugewandten Seite des Bodenbearbeitungsgeräts angeordnete, Bodenbearbeitungskammer, zumindest eine Antriebseinheit, welche insbesondere wenigstens einen Verbrennungsmotor und/oder vorteilhaft wenigstens einen Elektromotor umfasst, zumindest eine Elektronikeinheit und/oder zumindest eine Steuereinheit aufweisen.

Ferner soll unter einer "Energiespeichereinheit" insbesondere eine Einheit verstanden werden, welche insbesondere dazu vorgesehen ist, zumindest temporär elektrische Energie zu speichern und/oder zu erzeugen. Vorteilhaft ist die Energiespeichereinheit dazu vorgesehen, die Bodenbearbeitungsgerätevorrichtung und/oder zumindest ein Bauteil der Bodenbearbeitungsgerätevorrichtung, wie beispielsweise die Antriebseinheit, die Elektronikeinheit und/oder die Steuereinheit, mit Energie zu versorgen. Die Energiespeichereinheit kann dabei zumindest teilweise, vorzugsweise zu wenigstens einem Großteil und besonders bevorzugt vollständig als beliebige Energiespeichereinheit ausgebildet sein, wie beispielsweise als Benzintank, als Brennstoffzelle, als Kondensator, als Batterie und/oder vorzugsweise als Akkumulator, wie beispielsweise als Nickel-Cadmium-Akkumulator und/oder als Lithium-Ionen-Akkumulator. Bevorzugt ist die Energiespeichereinheit dabei als Energiespeicherzelle ausgebildet, insbesondere als Batteriezelle und/oder Akkuzelle. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Ferner soll unter einer "Bearbeitungseinheit" insbesondere eine Einheit verstanden werden, welche insbesondere zu einer Bearbeitung, insbesondere einer Flächenbearbeitung, vorteilhaft einer Bodenbearbeitung und/oder einer bodennahen Bearbeitung, vorgesehen ist. Insbesondere ist die Bearbeitungseinheit dabei linear und/oder vorteilhaft drehbar und/oder rotierend antreibbar ausgebildet. Zudem ist die Bearbeitungseinheit bevorzugt dazu vorgesehen, in zumindest einem Betriebszustand, insbesondere mittels einer Bewegung, vorteilhaft mittels einer Rotation und/oder einer rotierenden Bewegung, wenigstens einen Luftstrom, insbesondere den zuvor genannten Luftstrom, zu erzeugen und insbesondere nicht durch ein Gebläse, einen Lüfter, insbesondere Motorlüfter, einen Ventilator und/oder ein Sauglufterzeuger oder dergleichen. Vorzugsweise umfasst die Bearbeitungseinheit dabei zumindest ein, vorteilhaft genau ein, Bearbeitungswerkzeug, insbesondere Bodenbearbeitungswerkzeug. Das Bearbeitungswerkzeug kann dabei als beliebiges, insbesondere bewegliches, vorteilhaft rotierend antreibbares, Bearbeitungswerkzeug ausgebildet sein, wie beispielsweise als Bürste, als Tuch, als Lappen, als Faden, als Schnur, als Messer, als Schneideblatt und/oder als Schneidrotor. Insbesondere ist das Bearbeitungswerkzeug von einem Gebläse, einem Lüfter, insbesondere einem Motorlüfter, einem Ventilator und/oder einem Sauglufterzeuger oder dergleichen verschieden. Zudem kann die Bearbeitungseinheit zumindest eine, vorteilhaft genau eine, Bearbeitungswerkzeugaufnahme, welche insbesondere zu einer Aufnahme des Bearbeitungswerkzeugs vorgesehen ist, umfassen. Bevorzugt ist die Bearbeitungseinheit, insbesondere das Bearbeitungswerkzeug und/oder die Bearbeitungswerkzeugaufnahme zumindest teilweise, vorzugsweise zu wenigstens einem Großteil und besonders bevorzugt vollständig in der Bodenbearbeitungskammer angeordnet.

Darüber hinaus soll unter einer "Temperiereinheit" insbesondere eine, insbesondere aktive und/oder vorteilhaft passive, Einheit verstanden werden, welche insbesondere zumindest eine thermische Verbindung mit der Energiespeichereinheit und/oder dem, insbesondere von der Bearbeitungseinheit erzeugten und/oder vorteilhaft ausgehenden, Luftstrom aufweist und vorteilhaft dazu vorgesehen ist, eine Temperatur der Energiespeichereinheit zu beeinflussen. Darunter das ein Objekt ein weiteres Objekt "beeinflusst" soll in diesem Zusammenhang insbesondere verstanden werden, dass das weitere Objekt bei einer Abwesenheit des Objekts einen anderen Zustand, eine andere Quantität und/oder eine andere Temperatur aufweist und/oder annimmt als bei einer Anwesenheit des Objekts. Vorteilhaft ist die Temperiereinheit dazu vorgesehen, eine Temperatur der Energiespeichereinheit mittels des, insbesondere von der Bearbeitungseinheit erzeugten und/oder vorteilhaft ausgehenden, Luftstroms zu verändern, anzupassen, insbesondere an einen vorteilhaften Betrieb, und/oder in einem vorgegebenen und/oder vorgebbaren Temperaturbereich zu halten. Besonders bevorzugt ist die Temperiereinheit dazu vorgesehen, die Temperatur der Energiespeichereinheit derart zu verändern und/oder anzupassen, dass die Temperatur der Energiespeichereinheit, insbesondere zumindest während eines Betriebs, in einem optimalen Betriebstemperaturbereich liegt, insbesondere zwischen 5°C und 65°C, vorzugsweise zwischen 10°C und 45°C und besonders bevorzugt zwischen 15°C und 30°C. Vorteilhaft ist die Temperiereinheit dabei zumindest teilweise und vorzugsweise zu wenigstens einem Großteil in dem, insbesondere von der Bearbeitungseinheit erzeugten und/oder vorteilhaft ausgehenden, Luftstrom angeordnet. Ferner ist die Temperiereinheit besonders bevorzugt zumindest teilweise, vorzugsweise zu wenigstens einem Großteil und besonders bevorzugt vollständig in einem Nahbereich der Bearbeitungseinheit und vorteilhaft des Bearbeitungswerkzeugs angeordnet. Zusätzlich ist die Temperiereinheit vorteilhaft zumindest teilweise außerhalb des Gerätegehäuses angeordnet. Die Temperiereinheit kann dabei beispielsweise zumindest einen Fluidkanal, vorteilhaft Luftkanal, zumindest ein Luftleitmittel, welches vorteilhaft in einem Nahbereich der Bearbeitungseinheit angeordnet und/oder einstückig mit der Bearbeitungseinheit ausgebildet sein kann, zumindest ein Peltierelement, zumindest einen Wärmeübertrager, vorteilhaft einen Kühlkörper, und/oder zumindest eine Aufnahme, insbesondere für die Energiespeichereinheit, umfassen. Unter einem "Nahbereich" soll insbesondere ein räumlicher Bereich verstanden werden, welcher aus Punkten gebildet ist, die weniger als eine Hälfte, vorzugsweise weniger als ein Drittel, bevorzugt weniger als ein Viertel und besonders bevorzugt weniger als ein Sechstel eines Durchmessers und/oder einer Haupterstreckung der Bodenbearbeitungskammer und/oder der Bearbeitungseinheit von einem Referenzpunkt und/oder einem Referenzbauteil, insbesondere der Bearbeitungseinheit, entfernt sind und/oder die jeweils einen Abstand von höchstens 20 cm, vorzugsweise von höchstens 10 cm und besonders bevorzugt von höchstens 5 cm von einem Referenzpunkt und/oder einem Referenzbauteil, insbesondere der Bearbeitungseinheit, aufweisen. Unter "einstückig" soll in diesem Zusammenhang insbesondere zumindest stoffschlüssig verbunden verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig jedoch in einem Stück geformt verstanden werden. Vorzugsweise wird dieses eine Stück aus einem einzelnen Rohling, einer Masse und/oder einem Guss, wie beispielsweise in einem Extrusionsverfahren und/oder einem Spritzgussverfahren hergestellt. Darüber hinaus soll unter einem "aktiven Objekt" insbesondere ein Objekt verstanden werden, welches dazu vorgesehen ist, aktiv gesteuert und/oder angesteuert zu werden. Ferner soll unter einem "passiven Objekt" insbesondere ein Objekt verstanden werden, welches frei von einer Ansteuermöglichkeit ist. Durch eine entsprechende Ausgestaltung der Bodenbearbeitungsgerätevorrichtung kann insbesondere eine Effizienz, insbesondere eine Bearbeitungseffizienz, eine Zeiteffizienz, eine Bauteileeffizienz, eine Bauraumeffizienz, eine Ladeeffizienz und/oder eine Kosteneffizienz, verbessert werden. Insbesondere kann die Energiespeichereinheit vorteilhaft in einem optimalen Temperaturbereich betrieben werden, wodurch Beschädigungen und/oder Leistungsverluste vermieden und/oder eine Standzeit und/oder eine Dauerfestigkeit erhöht werden können. Zudem kann eine Flexibilität gesteigert werden, insbesondere da ein von Umgebungsbedingungen zumindest weitgehend unabhängiger Betrieb erreicht werden kann. Auch kann bei Verwendung einer als Akkumulator ausgebildeten Energiespeichereinheit eine Ladedauer vorteilhaft reduziert werden, insbesondere da aufgrund einer geringeren Betriebstemperatur der Energiespeichereinheit auf Kühlpausen vor und/oder während einem Ladezyklus verzichtet werden kann.

Vorzugsweise ist die Temperiereinheit wenigstens zu einer Kühlung der Energiespeichereinheit vorgesehen, wodurch vorteilhaft ein Überhitzen der Energiespeichereinheit, insbesondere bei Temperaturen oberhalb von 65°C, vermieden werden kann. Zudem können, insbesondere bei hohen Umgebungstemperaturen, wie beispielsweise im Hochsommer, vorteilhaft Kühlpausen vermieden werden, wodurch eine schnellere Bearbeitung und/oder ein optimierter, insbesondere leistungsoptimierter und/oder energieoptimierter, Betrieb ermöglicht wird. Alternativ oder zusätzlich ist jedoch auch denkbar, dass die Temperiereinheit zusätzlich, beispielsweise unter Verwendung einer Abwärme der Antriebseinheit, zu einer Erwärmung der Energiespeichereinheit vorgesehen ist, insbesondere bei einem Betrieb bei niedrigen Umgebungstemperaturen, wie beispielsweise in kalten Jahreszeiten und/oder in Eishallen. Zudem ist alternativ oder zusätzlich denkbar, dass eine Kühlung und/oder Erwärmung mittels einer Basisstation des Bodenbearbeitungsgeräts, einer Freiblaseeinheit, welche insbesondere zum Entfernen von Kondenswasser vorgesehen ist, einer, insbesondere zusätzlichen, Kühleinheit und/oder einer, insbesondere zusätzlichen, Erhitzungseinheit erfolgt. Eine Kühlung der Energiespeichereinheit erfolgt dabei vorzugsweise zumindest bei einer Temperatur der Energiespeichereinheit oberhalb von 65°C, vorteilhaft oberhalb von 55°C und besonders vorteilhaft oberhalb von 45°C. Zudem erfolgt eine Erwärmung der Energiespeichereinheit vorzugsweise zumindest bei einer Temperatur der Energiespeichereinheit unterhalb von 5°C, vorteilhaft unterhalb von 7,5°C und besonders vorteilhaft unterhalb von 10°C.

Ferner kann ein besonders einfacher, schneller und/oder effizienter Wärmetransport insbesondere dann erreicht werden, wenn die Temperiereinheit die Energiespeichereinheit, vorteilhaft unmittelbar, kontaktiert und/oder berührt. Insbesondere weisen die Temperiereinheit und die Energiespeichereinheit dabei zumindest eine, vorteilhaft aneinander angepasste, Kontaktfläche auf.

Darüber hinaus wird vorgeschlagen, dass die Temperiereinheit zumindest eine Energiespeicheraufnahme aufweist, welche dazu vorgesehen ist, die Energiespeichereinheit zumindest teilweise, vorzugsweise zu wenigstens einem Großteil und besonders bevorzugt vollständig aufzunehmen und wenigstens teilweise, vorzugsweise zu wenigstens einem Großteil und besonders bevorzugt vollständig in einem Nahbereich der Bearbeitungseinheit und vorteilhaft des Bearbeitungswerkzeugs anzuordnen. Insbesondere ist die Energiespeichereinheit somit in zumindest einem Betriebszustand zumindest teilweise, vorzugsweise zu wenigstens einem Großteil und besonders bevorzugt vollständig in einem Nahbereich der Bearbeitungseinheit und vorteilhaft des Bearbeitungswerkzeugs angeordnet. Vorteilhaft ist die Energiespeicheraufnahme und/oder die Energiespeichereinheit zudem zumindest teilweise und vorzugsweise zu wenigstens einem Großteil in dem, insbesondere von der Bearbeitungseinheit erzeugten und/oder vorteilhaft ausgehenden, Luftstrom angeordnet. Darüber hinaus ist die Energiespeicheraufnahme vorteilhaft dazu vorgesehen, die Energiespeichereinheit zumindest im Wesentlichen fluiddicht zu verschließen. Darunter, dass ein Objekt dazu vorgesehen ist, ein weiteres Objekt "zumindest im Wesentlichen fluiddicht" zu verschließen" soll in diesem Zusammenhang insbesondere verstanden werden, dass das Objekt dazu vorgesehen ist, ein Eindringen eines Fluids, vorteilhaft einer Flüssigkeit, insbesondere in das weitere Objekt, zu zumindest 95 %, vorzugsweise zu zumindest 97 % und besonders bevorzugt zu zumindest 99 % zu verhindern und/oder zu blockieren. Hierdurch kann insbesondere eine Effizienz des Wärmetransports verbessert werden.

In einer Ausgestaltung der Erfindung wird vorgeschlagen, dass die Bodenbearbeitungsgerätevorrichtung zumindest eine Bodenbearbeitungskammer, insbesondere die bereits zuvor genannte Bodenbearbeitungskammer, aufweist, in welcher die Bearbeitungseinheit und vorteilhaft zumindest das Bearbeitungswerkzeug, zu wenigstens einem Großteil und vorzugsweise vollständig und die Temperiereinheit zumindest teilweise angeordnet ist. Insbesondere trifft der, insbesondere von der Bearbeitungseinheit erzeugte und/oder vorteilhaft ausgehende, Luftstrom in diesem Fall direkt, insbesondere umlenkungsfrei und/oder führungsfrei, auf die Temperiereinheit, insbesondere ein Bauteil der Temperiereinheit, welches die Energiespeichereinheit, vorteilhaft unmittelbar, kontaktiert und/oder berührt, bevorzugt einen Wärmeübertrager der Temperiereinheit, wodurch insbesondere auf zusätzliche Luftkanäle verzichtet werden kann. Zudem kann vorteilhaft eine Bauteileeffizienz gesteigert und eine Effizienz des Wärmetransports weiter verbessert werden.

Vorzugsweise ist die Energiespeichereinheit zumindest teilweise in der Bodenbearbeitungskammer angeordnet, wodurch insbesondere eine vorteilhaft nahezu bauraumneutrale Ausgestaltung erreicht werden kann.

In einer bevorzugten Ausgestaltung der Erfindung wird vorgeschlagen, dass die Bodenbearbeitungsgerätevorrichtung zumindest eine Bodenbearbeitungskammer, insbesondere die bereits zuvor genannte Bodenbearbeitungskammer, aufweist, welche zumindest eine Öffnung definiert, welche insbesondere zu einer Zufuhr und/oder Abfuhr zumindest eines Teils eines, insbesondere zu bearbeitenden und/oder bearbeiteten, Bearbeitungsguts, vorteilhaft Schnittguts, zur Bearbeitungseinheit und/oder von der Bearbeitungseinheit vorgesehen ist, und die Temperiereinheit zumindest teilweise in einem Nahbereich der Öffnung angeordnet ist. Hierdurch kann insbesondere eine einfache Integration erreicht werden, insbesondere ohne weitgehende designtechnische Anpassungen vornehmen zu müssen. Die Öffnung entspricht dabei insbesondere einer Ausnehmung der Bodenbearbeitungskammer. Vorteilhaft ist die Öffnung dabei bezogen auf eine Vorzugsbewegungsrichtung, insbesondere des Bodenbearbeitungsgeräts, zumindest teilweise und vorzugsweise zu wenigstens einem Großteil vor oder hinter der Bearbeitungseinheit angeordnet. Besonders bevorzugt weist die Bodenbearbeitungskammer zumindest zwei vorteilhaft genau zwei, Öffnungen, insbesondere eine Bearbeitungsgutzufuhröffnung und eine Bearbeitungsgutabfuhröffnung, auf.

Die Temperiereinheit könnte die Bodenbearbeitungskammer beispielsweise unmittelbar kontaktieren und/oder berühren. Vorzugsweise wird jedoch vorgeschlagen, dass die Bodenbearbeitungsgerätevorrichtung zumindest eine Bodenbearbeitungskammer, insbesondere die bereits zuvor genannte Bodenbearbeitungskammer, aufweist, mit welcher die Temperiereinheit zumindest teilweise einstückig ausgebildet ist. Vorteilhaft kontaktiert die Temperiereinheit die Bodenbearbeitungskammer dabei großflächig. Darunter, dass ein Objekt mit einem weiteren Objekt "zumindest teilweise einstückig ausgebildet" ist soll in diesem Zusammenhang insbesondere verstanden werden, dass zumindest ein Bauteil des Objekts und/oder das Objekt einstückig mit zumindest einem Bauteil des weiteren Objekts und/oder dem weiteren Objekt verbunden und/oder ausgebildet ist. Darunter, dass zwei Objekte sich "großflächig kontaktieren" soll insbesondere verstanden werden, dass eine Kontaktfläche zwischen den Objekten einem Flächenanteil von zumindest 20 %, vorteilhaft von zumindest 40%, vorzugsweise von zumindest 60 % und besonders bevorzugt von zumindest 80 % einer Seitenfläche wenigstens eines der Objekte entspricht, welche insbesondere dem anderen Objekt zugewandt ist. Hierdurch kann insbesondere ein besonders effizienter Wärmeübertrag, insbesondere zwischen der Temperiereinheit und der Bodenbearbeitungskammer erreicht werden.

Vorzugsweise ist die Temperiereinheit in einem, bezogen auf eine Vorzugsbewegungsrichtung, insbesondere des Bodenbearbeitungsgeräts, vorderen Bereich des Gerätegehäuses und vorteilhaft zumindest vor einer Antriebswelle der Bodenbearbeitungsgerätevorrichtung angeordnet. In einer besonders bevorzugten Ausgestaltung der Erfindung wird vorgeschlagen, dass die Temperiereinheit, bezogen auf eine Vorzugsbewegungsrichtung, insbesondere des Bodenbearbeitungsgeräts, zumindest teilweise und vorzugsweise zu wenigstens einem Großteil oder vollständig, vor der Bearbeitungseinheit, insbesondere zumindest vor der Bearbeitungswerkzeugaufnahme und vorteilhaft vor dem Bearbeitungswerkzeug, angeordnet ist. Hierdurch kann insbesondere eine Verschmutzung der Temperiereinheit, insbesondere durch ein Bearbeitungsgut, wie beispielsweise durch Schnittgut oder dergleichen, vermieden werden.

Des Weiteren wird vorgeschlagen, dass die Temperiereinheit zumindest einen Wärmeübertrager aufweist, welcher insbesondere in zumindest einem Betriebszustand zumindest teilweise in dem, insbesondere von der Bearbeitungseinheit erzeugten und/oder vorteilhaft ausgehenden, Luftstrom angeordnet ist und vorteilhaft zu einem, insbesondere unmittelbaren, Wärmetransport und/oder Wärmeaustausch zwischen dem Luftstrom und der Energiespeichereinheit vorgesehen ist. Besonders bevorzugt umfasst der Wärmeübertrager dabei eine Mehrzahl, wie beispielsweise zumindest zwei, zumindest drei, zumindest vier und/oder zumindest fünf, Rippenelemente, insbesondere Lamellen und/oder Stifte, welche vorteilhaft zumindest teilweise bogenförmig, vorteilhaft kreisbogenförmig sind und/oder angeordnet sind, insbesondere entlang einer Hauptströmungsrichtung des, insbesondere von der Bearbeitungseinheit erzeugten und/oder vorteilhaft ausgehenden, Luftstroms. Insbesondere ist zumindest der Wärmeübertrager in zumindest einem Betriebszustand zumindest teilweise, vorzugsweise zu wenigstens einem Großteil und besonders bevorzugt vollständig in einem Nahbereich der Bearbeitungseinheit angeordnet. Darüber hinaus ist der Wärmeübertrager vorzugsweise zumindest teilweise, vorzugsweise zu wenigstens einem Großteil und besonders bevorzugt vollständig, außerhalb des Gerätegehäuses, vorteilhaft in der Bodenbearbeitungskammer, angeordnet. Bevorzugt besteht der Wärmeübertrager dabei zumindest teilweise, vorzugsweise zu wenigstens einem Großteil und besonders bevorzugt vollständig aus einem Material, welches eine, insbesondere erhöhte, Wärmeleitfähigkeit von zumindest 0,3 W / mK und vorteilhaft von zumindest 0,5 W / mK aufweist. Hierdurch kann insbesondere eine Wärmetransport und/oder ein Wärmaustausch vereinfacht und/oder beschleunigt werden.

In einer bevorzugten Ausgestaltung der Erfindung wird vorgeschlagen, dass die Temperiereinheit zumindest einen Wärmeübertrager, insbesondere den bereits zuvor genannten Wärmeübertrager, aufweist, welcher zumindest teilweise, vorzugsweise zu wenigstens einem Großteil und besonders bevorzugt vollständig aus einem elektrisch isolierenden Material besteht. Alternativ oder zusätzlich besteht der Wärmeübertrager zumindest teilweise, vorzugsweise zu wenigstens einem Großteil und besonders bevorzugt vollständig aus einem korrosionsbeständigen Material. Der Wärmeübertrager besteht besonders bevorzugt zumindest teilweise, vorzugsweise zu wenigstens einem Großteil und besonders bevorzugt vollständig aus einem Kunststoff, vorteilhaft einem, insbesondere synthetischen, Polymer, bevorzugt aus HDPE ("high-density-Polymer") und weist vorteilhaft eine Wärmeleitfähigkeit zwischen 0,2 W / mK und 0,7 W / mK und vorteilhaft zwischen 0,35 W / mK und 0,5 W / mK auf. Hierdurch können insbesondere Kosten reduziert und Sicherheitsbestimmungen eingehalten werden. Zudem können auch komplexe Geometrien und/oder Wärmeübertrager mit dünnen Wandstärken verwirklicht werden, wodurch die Temperiereinheit und insbesondere der Wärmeübertrager vorteilhaft an unterschiedliche Bedingungen und/oder Gegebenheiten angepasst werden kann. Zudem kann vorteilhaft ein Gewicht der Temperiereinheit gering gehalten werden, wodurch eine Leistungseffizienz gesteigert und/oder ein Komfort, insbesondere für einen Verwender, verbessert werden kann.

In einer Ausgestaltung der Erfindung wird vorgeschlagen, dass die Energiespeichereinheit wechselbar und/oder austauschbar ausgebildet ist. Vorteilhaft weist die Temperiereinheit dabei zumindest eine Schnittstelle zur, vorteilhaft formschlüssigen und insbesondere großflächigen, Anbindung der Energiespeichereinheit auf, in welche die Energiespeichereinheit wechselbar und/oder austauschbar einführbar, vorteilhaft einschiebbar, wie beispielsweise mittels zumindest einer Gleitschiene und wenigstens einem Rastelement, ist. Vorteilhaft weist die Energiespeichereinheit dabei eine, insbesondere zu der Schnittstelle korrespondierende, weitere Schnittstelle auf. Bevorzugt liegen die Temperiereinheit und die Energiespeichereinheit dabei großflächig aneinander an. Vorteilhaft ist eine Kontaktfläche zwischen der Temperiereinheit und der Energiespeichereinheit dabei zumindest weitgehend eben ausgebildet. Hierdurch kann insbesondere eine Flexibilität vorteilhaft verbessert werden. Insbesondere zu einer Verbesserung eines thermischen Kontakts, ist in diesem Fall zudem denkbar, dass die Temperiereinheit zumindest ein Kontaktierungselement, wie beispielsweise eine Wärmeleitpaste, ein wärmeleitendes Gel und/oder ein elastisches Element mit wärmeleitenden Eigenschaften, aufweist, welches vorteilhaft in einem Nahbereich der Schnittstelle und/oder zwischen der Schnittstelle und der Energiespeichereinheit angeordnet sein kann. Dabei ist beispielsweise denkbar, dass das Kontaktierungselement mittels einer Kompression bei einer Verbindung der Temperiereinheit und der Energiespeichereinheit eine großflächige Verbindung zwischen der Temperiereinheit und der Energiespeichereinheit ausbildet.

Darüber hinaus wird vorgeschlagen, dass die Bodenbearbeitungsgerätevorrichtung wenigstens ein Gerätegehäuse, insbesondere das bereits zuvor genannte Gerätegehäuse, und wenigstens eine, insbesondere zumindest teilweise elastisch ausgebildete, Dichteinheit aufweist, wobei die Temperiereinheit zumindest teilweise außerhalb des Gerätegehäuses angeordnet ist und die Dichteinheit dazu vorgesehen ist, eine Durchtrittsstelle der Temperiereinheit durch das Gerätegehäuse zumindest im Wesentlichen fluiddicht zu verschließen. Vorteilhaft ist die Dichteinheit dabei zumindest teilweise, vorzugsweise zu wenigstens einem Großteil und besonders bevorzugt vollständig, zwischen der Temperiereinheit und dem Gerätegehäuse angeordnet und kontaktiert und/oder berührt besonders bevorzugt die Temperiereinheit und/oder das Gerätegehäuse unmittelbar. Besonders bevorzugt umgreift die Dichteinheit die Temperiereinheit zumindest teilweise, vorzugsweise zu wenigstens einem Großteil und besonders bevorzugt vollständig. Die Dichteinheit kann dabei insbesondere zumindest teilweise, vorzugsweise zu wenigstens einem Großteil und besonders bevorzugt vollständig aus einem beliebigen Material bestehen, vorteilhaft jedoch aus einem Elastomer, einem Silikon und/oder einem Gummi. Besonders bevorzugt ist die Dichteinheit zumindest dazu vorgesehen, ein Eindringen von Wasser in das Gerätegehäuse und/oder in die Temperiereinheit vollständig zu verhindern. Hierdurch kann insbesondere eine vorteilhafte Abdichtung erreicht werden und/oder IP-Schutzklassifizierungen erfüllt werden.

Des Weiteren wird eine Bodenbearbeitungsgerätevorrichtung vorgeschlagen, mit zumindest einer Energiespeichereinheit und mit zumindest einer beweglich antreibbaren Bearbeitungseinheit, wobei die Bodenbearbeitungsgerätevorrichtung wenigstens ein, insbesondere als Außengehäuse ausgebildetes, Gerätegehäuse und zumindest eine Dämmeinheit aufweist, welche dazu vorgesehen ist, das Gerätegehäuse zumindest teilweise und vorzugsweise zu wenigstens einem Großteil gegenüber einer Umgebung, insbesondere einem Umgebungsbereich des Bodenbearbeitungsgeräts, zu dämmen, insbesondere wärmedämmend und/oder schalldämmend. Unter einer "Dämmeinheit" soll in diesem Fall insbesondere eine Einheit verstanden werden, welche insbesondere dazu vorgesehen ist, einen Wärmeübertrag, eine Wärmeausbreitung und/oder eine Transmission von Wärmeenergie, insbesondere durch das Gerätegehäuse und/oder in das Gerätegehäuse, und/oder einen Schallübertrag, eine Schallausbreitung und/oder eine Schalltransmission, insbesondere durch das Gerätegehäuse, zumindest teilweise zu beeinflussen und vorteilhaft zumindest teilweise zu reduzieren, zu verhindern und/oder zu blockieren. Die Dämmeinheit kann dabei zumindest teilweise, vorzugsweise zu wenigstens einem Großteil und besonders bevorzugt vollständig, aus einem beliebigen Material bestehen, wie beispielsweise aus Styropor, Glaswolle, Steinwolle, Naturfasern, Zellulose, Perlite und/oder Polystyrol. Zudem kann die Dämmeinheit in einer beliebigen Form vorliegen, wie beispielsweise als Schüttgut, als Matte, als Platte, als Schaum, als Flüssigkeit und/oder als Gas. Insbesondere könnte die Dämmeinheit auch durch eine Unterdruckeinheit ausgebildet sein, welche zumindest einen Bereich mit einem Druck, insbesondere Luftdruck von höchstens 300 mbar, vorteilhaft von höchstens 100 mbar und besonders vorteilhaft von höchstens 1 mbar definiert. Insbesondere ist die Dämmeinheit dazu vorgesehen, zumindest die Temperiereinheit und/oder die Energiespeichereinheit zumindest teilweise und vorzugsweise zu wenigstens einem Großteil abzuschirmen. Ferner ist die Dämmeinheit insbesondere zumindest teilweise, vorzugsweise zu wenigstens einem Großteil und besonders bevorzugt vollständig, in einem Nahbereich einer Gehäuseschale des Gerätegehäuses und bevorzugt in einem, bezogen auf eine Betriebsposition des Bodenbearbeitungsgeräts, oberen Bereich des Gerätegehäuses angeordnet. Besonders vorteilhaft ist die Dämmeinheit zwischen einer, insbesondere sonnenbeständigen, äußeren Gehäuseschale und einer, vorteilhaft zumindest teilweise schalldämmenden, inneren Gehäuseschale angeordnet. Hierdurch kann insbesondere eine zusätzliche Erhitzung der Bodenbearbeitungsgerätevorrichtung und/oder des Bodenbearbeitungsgeräts, insbesondere zumindest der Energiespeichereinheit, reduziert und/oder vorteilhaft gänzlich vermieden werden. Zudem kann vorteilhaft ein Geräuschpegel reduziert werden, wodurch insbesondere ein Bedienkomfort erhöht werden kann.

Zudem geht die Erfindung aus von einem Verfahren zum Betrieb einer Bodenbearbeitungsgerätevorrichtung, welche zumindest eine Energiespeichereinheit und zumindest eine beweglich antreibbare Bearbeitungseinheit umfasst, durch welche in zumindest einem Betriebszustand wenigstens ein Luftstrom erzeugt wird, welcher vorteilhaft von der Bearbeitungseinheit ausgeht.

Es wird vorgeschlagen, dass der Luftstrom, insbesondere in zumindest einem Betriebszustand, zu einem Wärmetransport, bevorzugt zumindest mittels Konvektion, von der Energiespeichereinheit, insbesondere zu einem Umgebungsbereich, und/oder zu der Energiespeichereinheit, insbesondere von einem Umgebungsbereich, verwendet wird. Hierdurch kann insbesondere eine Effizienz, insbesondere eine Bearbeitungseffizienz, eine Zeiteffizienz, eine Bauteileeffizienz, eine Bauraumeffizienz und/oder eine Kosteneffizienz, verbessert werden. Zudem kann eine Flexibilität gesteigert werden, insbesondere da ein von Umgebungsbedingungen zumindest weitgehend unabhängiger Betrieb erreicht werden kann.

Die Bodenbearbeitungsgerätevorrichtung soll hierbei nicht auf die oben beschriebene Anwendung und Ausführungsform beschränkt sein. Insbesondere kann die Bodenbearbeitungsgerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als autonomer Rasenmäher ausgebildetes Bodenbearbeitungsgerät mit einer Bodenbearbeitungsgerätevorrichtung in einer Darstellung von oben,
- Fig. 2: das Bodenbearbeitungsgerät in einer seitlichen Teildarstellung,
- Fig. 3: das Bodenbearbeitungsgerät in einer Darstellung von unten,
- Fig. 4: ein Energiespeichermodul der Bodenbearbeitungsgerätevorrichtung in einer ersten Explosionsdarstellung von schräg oben,
- Fig. 5: das Energiespeichermodul in einer zweiten Explosionsdarstellung von schräg unten,
- Fig. 6: das Energiespeichermodul in einem zusammengesetzten Zustand in einer Ansicht von unten,
- Fig. 7: ein Bodenbearbeitungsgerät mit einer weiteren Bodenbearbeitungsgerätevorrichtung in einer Darstellung von unten,
- Fig. 8: eine Bearbeitungseinheit einer weiteren Bodenbearbeitungsgerätevorrichtung in einer perspektivischen Darstellung,
- Fig. 9: ein Teil einer Bearbeitungseinheit einer weiteren Bodenbearbeitungsgerätevorrichtung in einer perspektivischen Darstellung,
- Fig. 10: die Bearbeitungseinheit aus Figur 9 in einer perspektivischen Darstellung und
- Fig. 11: ein Bodenbearbeitungsgerät mit einer weiteren Bodenbearbeitungsgerätevorrichtung in einer perspektivischen Darstellung.

### Beschreibung der Ausführungsbeispiele

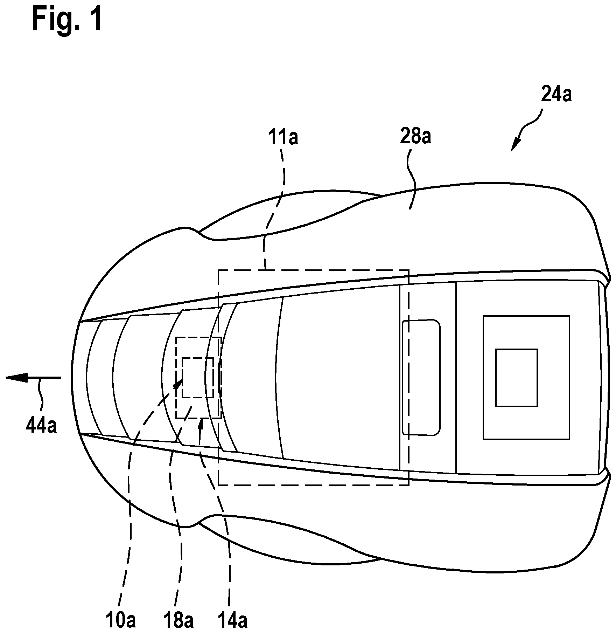

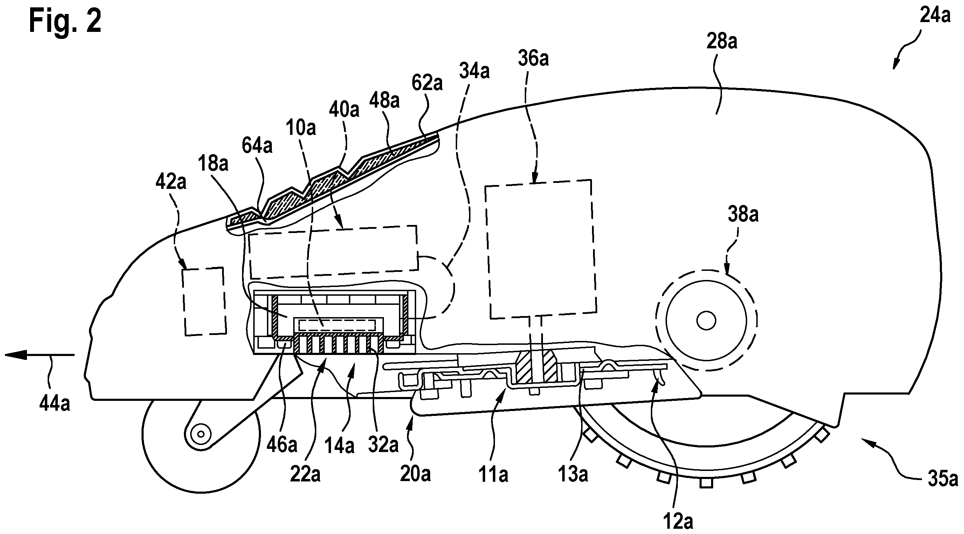

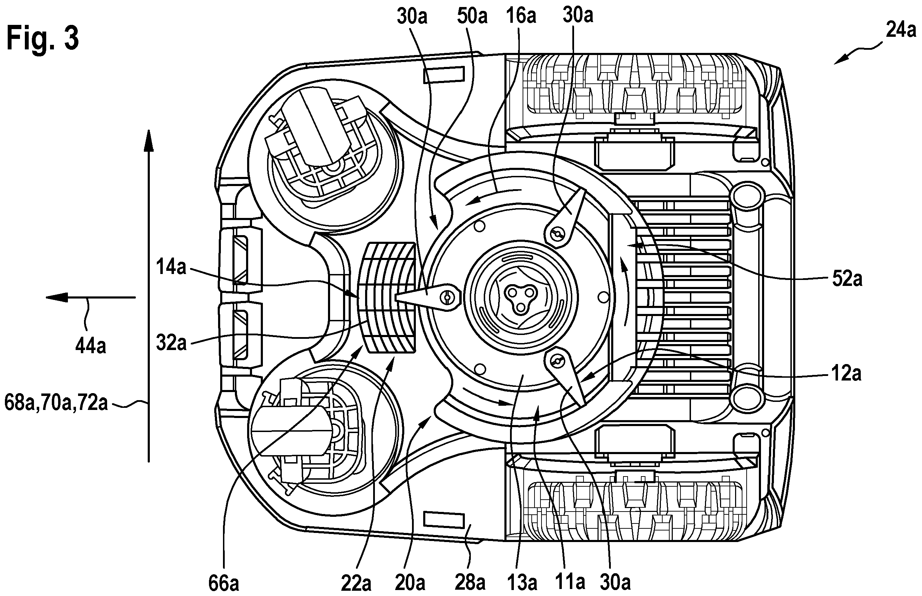

Die Figuren 1 bis 3 zeigen ein Bodenbearbeitungsgerät 24a in einer Darstellung von oben (vgl. Figur 1), in einer seitlichen Teildarstellung (vgl. Figur 2) und in einer Darstellung von unten (vgl. Figur 3), wobei insbesondere in Figur 2 der Übersichtlichkeit halber einige Bauteile des Bodenbearbeitungsgeräts 24a entfernt wurden Das Bodenbearbeitungsgerät 24a ist im vorliegenden Fall als autonomes Bodenbearbeitungsgerät ausgebildet. Das Bodenbearbeitungsgerät 24a ist selbstfahrend ausgebildet und insbesondere dazu vorgesehen, eine Bodenbearbeitung selbsttätig zu verrichten. Das Bodenbearbeitungsgerät 24a ist akkubetrieben ausgebildet. Das Bodenbearbeitungsgerät 24a ist dabei beispielhaft als autonomer Rasenmäher ausgebildet und insbesondere zu einer Bearbeitung eines bodennahen Bereichs, insbesondere zum Schneiden und/oder Mähen einer Rasenfläche, vorgesehen. Alternativ kann ein Bodenbearbeitungsgerät jedoch auch als anderes Bodenbearbeitungsgerät ausgebildet sein, wie beispielsweise als Staubsauger, als Kehrmaschine, als Reinigungsmaschine, als Eisbearbeitungsmaschine, als Vertikutierer und/oder als, insbesondere handgehaltener, Rasentrimmer.

Das Bodenbearbeitungsgerät 24a weist eine Bodenbearbeitungsgerätevorrichtung auf. Die Bodenbearbeitungsgerätevorrichtung umfasst ein Gerätegehäuse 28a. Fas Gerätegehäuse 28a ist als Außengehäuse ausgebildet. Innerhalb des Gerätegehäuses 28a sind wenigstens ein Großteil der für einen Betrieb des Bodenbearbeitungsgeräts 24a benötigten Bauteile angeordnet. Im vorliegenden Fall weist das Gerätegehäuse 28a zumindest in einem Teilbereich eine äußere Gehäuseschale 62a und eine innere Gehäuseschale 64a auf. Die äußere Gehäuseschale 62a ist einer Umgebung zugewandt. Die äußere Gehäuseschale 62a ist sonnenbeständig ausgebildet. Die innere Gehäuseschale 64a ist der Umgebung abgewandt. Die innere Gehäuseschale 64a ist zumindest teilweise schalldämmend ausgebildet. Die äußere Gehäuseschale 62a und die innere Gehäuseschale 64a definieren einen Dämmeinheitenaufnahmebereich. Alternativ ist jedoch auch denkbar, auf einen Dämmeinheitenaufnahmebereich und/oder zumindest eine der Gehäuseschalen zu verzichten. Zudem weist die Bodenbearbeitungsgerätevorrichtung ein an sich bekanntes Fahrwerk 35a auf. Ferner weist die Bodenbearbeitungsgerätevorrichtung eine Bodenbearbeitungskammer 20a auf. Die Bodenbearbeitungskammer 20a ist auf einer Unterseite und/oder auf einer einem Boden zugewandten Seite des Bodenbearbeitungsgeräts 24a angeordnet. Die Bodenbearbeitungskammer 20a ist dabei zur Unterseite und/oder auf der dem Boden zugewandten Seite des Bodenbearbeitungsgeräts 24a geöffnet. Die Bodenbearbeitungskammer 20a ist im vorliegenden Fall als Schneidschüssel ausgebildet. Die Bodenbearbeitungskammer 20a besteht aus einem Kunststoff. Alternativ ist denkbar, dass eine Bodenbearbeitungskammer zumindest teilweise, vorzugsweise zu wenigstens einem Großteil und besonders bevorzugt vollständig, aus einem beliebigen anderen Material besteht, wie beispielsweise einem Verbundwerkstoff, einer Legierung, einer Keramik und/oder einem Metall. Die Bodenbearbeitungsgerätevorrichtung weist ferner eine Bearbeitungseinheit 11a auf. Die Bearbeitungseinheit 11a ist zumindest teilweise in der Bodenbearbeitungskammer 20a angeordnet. Die Bearbeitungseinheit 11a umfasst eine Bearbeitungswerkzeugaufnahme 13a. Zudem weist die Bearbeitungseinheit 11a ein Bearbeitungswerkzeug 12a auf. Das Bearbeitungswerkzeug 12a ist drehbar und/oder rotierend antreibbar ausgebildet. Das Bearbeitungswerkzeug 12a ist als Schneidmesser ausgebildet. Das Bearbeitungswerkzeug 12a ist dabei von einem Gebläse, einem Lüfter, insbesondere einem Motorlüfter, einem Ventilator und/oder einem Sauglufterzeuger oder dergleichen verschieden. Das Bearbeitungswerkzeug 12a besteht aus Metall, im vorliegenden Fall insbesondere Stahl. Ferner umfasst das Bearbeitungswerkzeug 12a beispielhaft drei Schneidelemente 30a. Die Schneidelemente 30a sind in einem Winkelabstand von 120° angeordnet. Das Bearbeitungswerkzeug 12a ist zum Bearbeiten eines Bearbeitungsguts vorgesehen. Das Bearbeitungswerkzeug 12a ist zu einer bodennahen Bearbeitung, insbesondere zu einem Schneiden und/oder Mähen einer Rasenfläche, vorgesehen. Alternativ sind jedoch auch andere Bearbeitungseinheiten, insbesondere mit anderen Bearbeitungswerkzeugen, andere Schneidmesser und/oder Schneidmesser mit einer anderen Anzahl an Schneidelementen, Schneidgeometrien und/oder aus anderen Materialien bestehend, denkbar. Auch könnte eine Bearbeitungseinheit, insbesondere eine Bearbeitungswerkzeugaufnahme und/oder ein Bearbeitungswerkzeug, zumindest teilweise, vorzugsweise zu wenigstens einem Großteil und besonders bevorzugt vollständig aus einem beliebigen Material bestehen, wie beispielsweise Kunststoff, einem Verbundwerkstoff, einer Legierung, einer Keramik und/oder einem Metall, wie beispielsweise Stahl.

Weiterhin definiert die Bodenbearbeitungskammer 20a zumindest eine Öffnung 50a, 52a. Im vorliegenden Fall definiert die Bodenbearbeitungskammer 20a zwei Öffnungen 50a, 52a. Eine erste Öffnung 50a der Öffnungen 50a, 52a ist als Bearbeitungsgutzufuhröffnung ausgebildet und bezogen auf eine Vorzugsbewegungsrichtung 44a des Bodenbearbeitungsgeräts 24a vor der Bearbeitungseinheit 11a angeordnet. Eine zweite Öffnung 52a der Öffnungen 50a, 52a ist als Bearbeitungsgutabfuhröffnung ausgebildet und bezogen auf die Vorzugsbewegungsrichtung 44a des Bodenbearbeitungsgeräts 24a hinter der Bearbeitungseinheit 11a angeordnet. Die Öffnungen 50a, 52a sind dabei zu einer Zufuhr und Abfuhr eines Bearbeitungsguts, im vorliegenden Fall insbesondere eines Schnittguts, insbesondere Gras, zur Bearbeitungseinheit 11a und von der Bearbeitungseinheit 11a vorgesehen.

Zum Antrieb und/oder Betrieb der Bearbeitungseinheit 11a umfasst die Bodenbearbeitungsgerätevorrichtung eine Antriebseinheit 36a. Die Antriebseinheit 36a ist in dem Gerätegehäuse 28a angeordnet. Die Antriebseinheit 36a umfasst einen Motor, im vorliegenden Fall insbesondere einen Elektromotor. Die Antriebseinheit 36a weist zumindest eine Wirkverbindung mit der Bearbeitungseinheit 11a auf. Dazu kann die Antriebseinheit 36a weitere Einheiten umfassen, wie beispielsweise zumindest ein Getriebe. Zudem umfasst die Bodenbearbeitungsgerätevorrichtung einen Fahrwerkantrieb 38a. Der Fahrwerkantrieb 38a ist auf bekannte Art und Weise zu einem Antrieb des Fahrwerks 35a vorgesehen. Der Fahrwerkantrieb 38a weist im vorliegenden Fall zumindest eine Wirkverbindung mit der Antriebseinheit 36a auf. Alternativ ist jedoch auch denkbar, einen Fahrwerkantrieb vollständig separat und/oder autonom von einer Antriebseinheit auszubilden. Zu einer Energieversorgung umfasst die Bodenbearbeitungsgerätevorrichtung ferner eine Energiespeichereinheit 10a. Die Energiespeichereinheit 10a ist zu einem Großteil innerhalb des Gerätegehäuses 28a angeordnet. Im vorliegenden Fall ist die Energiespeichereinheit 10a fest verbaut. Die Energiespeichereinheit 10a ist als Akkumulator, insbesondere als Lithium-Ionen-Akkumulator, ausgebildet. Die Energiespeichereinheit 10a umfasst wenigstens eine Energiezelle 76a, im vorliegenden Fall insbesondere Akkuzelle, und ist insbesondere als wenigstens eine Energiezelle 76a ausgebildet. Ein optimaler Betriebstemperaturbereich der Energiespeichereinheit 10a liegt dabei zwischen 18°C und 25°C. Die Energiespeichereinheit 10a weist ferner zumindest eine Wirkverbindung mit der Antriebseinheit 36a auf. Die Energiespeichereinheit 10a ist dabei zumindest dazu vorgesehen, in zumindest einem Betriebszustand die Antriebseinheit 36a mit Energie zu versorgen. Alternativ ist denkbar, eine Energiespeichereinheit als Batterie und/oder als Brennstoffzelle auszubilden. Zudem könnte eine Energiespeichereinheit wechselbar und/oder austauschbar ausgebildet sein. Darüber hinaus umfasst die Bodenbearbeitungsgerätevorrichtung weitere Einheiten zu einem Betrieb des Bodenbearbeitungsgeräts 24a, wie beispielsweise eine Elektronikeinheit 40a und eine Steuereinheit 42a. Im vorliegenden Fall ist die Energiespeichereinheit 10a zu einer Energieversorgung der Elektronikeinheit 40a und der Steuereinheit 42a vorgesehen.

Um einen leistungseffizienten und/oder beschädigungsfreien Betrieb der Energiespeichereinheit 10a zu gewährleisten, sollte eine Temperatur der Energiespeichereinheit 10a stets in dem optimalen Betriebstemperaturbereich liegen. Insbesondere bei sehr heißen und/oder kalten Umgebungstemperaturen, wie beispielsweise im Hochsommer und/oder in Eishallen, kann eine Temperatur der Energiespeichereinheit 10a jedoch bei bisher bekannten Lösungen oftmals nicht in diesem optimalen Betriebstemperaturbereich gehalten werden, was insbesondere zu Kühlpausen und/oder Erwärmungspausen führen kann, insbesondere falls eine Temperatur der Energiespeichereinheit 10a über einen kritischen Wert von etwa 65°C steigt und/oder unter einen kritischen Wert von etwa 5°C fällt.

Aus diesem Grund weist die Bodenbearbeitungsgerätevorrichtung zur Änderung und/oder Anpassung der Temperatur der Energiespeichereinheit 10a eine Temperiereinheit 14a auf. Die Temperiereinheit 14a ist passiv ausgebildet. Die Temperiereinheit 14a ist zu einem Großteil innerhalb des Gerätegehäuses 28a angeordnet. Die Temperiereinheit 14a ist bezogen auf die Vorzugsbewegungsrichtung 44a des Bodenbearbeitungsgeräts 24a in einem vorderen Bereich des Gerätegehäuses 28a angeordnet. Zudem ist die Temperiereinheit 14a zumindest teilweise außerhalb des Gerätegehäuses 28a angeordnet. Die Temperiereinheit 14a weist dabei eine Durchtrittstelle 66a durch das Gerätegehäuse 28a auf. Die Temperiereinheit 14a ist in einem Nahbereich der Bearbeitungseinheit 11a angeordnet. Im vorliegenden Fall ist die Temperiereinheit 14a zumindest teilweise in der Bodenbearbeitungskammer 20a angeordnet. Die Temperiereinheit 14a ist ferner in einem Nahbereich der ersten Öffnung 50a angeordnet. Somit ist die Temperiereinheit 14a bezogen auf die Vorzugsbewegungsrichtung 44a des Bodenbearbeitungsgeräts 24a vor der Bearbeitungseinheit 11a angeordnet. Zudem ist die Temperiereinheit 14a im vorliegenden Fall derart ausgerichtet, dass eine Haupterstreckungsrichtung 68a der Temperiereinheit 14a senkrecht zur Vorzugsbewegungsrichtung 44a des Bodenbearbeitungsgeräts 24a ausgerichtet ist. Zudem ist die Haupterstreckungsrichtung 68a der Temperiereinheit 14a horizontal bezogen auf einen Untergrund ausgerichtet.

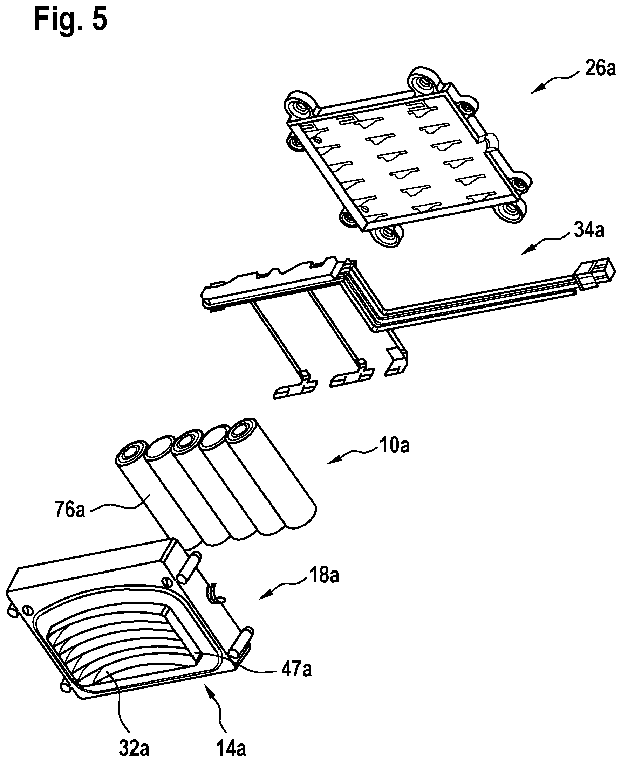

Um eine Schutzklassifizierung des Bodenbearbeitungsgeräts 24a beizubehalten, umfasst die Bodenbearbeitungsgerätevorrichtung zudem eine Dichteinheit 46a. Die Dichteinheit 46a ist elastisch ausgebildet. Die Dichteinheit 46a besteht aus einem Gummimaterial. Die Dichteinheit 46a ist an dem Gerätegehäuse 28a angeordnet, insbesondere befestigt. Die Dichteinheit 46a umgreift die Temperiereinheit 14a in einem montierten Zustand vollständig. Die Dichteinheit 46a liegt dabei an einer Dichtfläche 47a der Temperiereinheit 14a an (vgl. auch Figur 5). Die Dichteinheit 46a ist dazu vorgesehen ist, die Durchtrittstelle 66a der Temperiereinheit 14a durch das Gerätegehäuse 28a zumindest im Wesentlichen fluiddicht zu verschließen. Grundsätzlich ist auch denkbar, eine Dichteinheit aus einem beliebigen anderen Material zu verwenden.

Die Temperiereinheit 14a ist darüber hinaus zumindest teilweise in einem von der Bearbeitungseinheit 11a erzeugten Luftstrom 16a angeordnet. Die Temperiereinheit 14a weist dabei eine thermische Verbindung mit dem Luftstrom 16a auf. Zudem weist die Temperiereinheit 14a eine thermische Verbindung mit der Energiespeichereinheit 10a auf. Die Temperiereinheit 14a ist im vorliegenden Fall zu einer Kühlung der Energiespeichereinheit 10a vorgesehen. Die Temperiereinheit 14a ist dazu vorgesehen, eine Temperatur der Energiespeichereinheit 10a in zumindest einem Betriebszustand zu reduzieren und vorzugsweise zumindest unterhalb von 65°C, vorteilhaft zumindest unterhalb von 45°C, zu halten. Dabei ist die Temperiereinheit 14a dazu vorgesehen, in dem zumindest einem Betriebszustand den von der Bearbeitungseinheit 11a erzeugten und von der Bearbeitungseinheit 11a ausgehenden Luftstrom 16a zu einem Wärmetransport von der Energiespeichereinheit 10a zu einem Umgebungsbereich, insbesondere des Bodenbearbeitungsgeräts 24a, zu verwenden. Die Bearbeitungseinheit 11a wirkt dabei zumindest teilweise als Lüfter und/oder Ventilator. Alternativ oder zusätzlich könnte eine Temperiereinheit auch zu einer Erwärmung einer Energiespeichereinheit vorgesehen sein. Auch könnte eine Bearbeitungseinheit zumindest ein Luftleitmittel, beispielsweise eine aerodynamische Profilierung, aufweisen, insbesondere zur Verstärkung des Luftstroms und/oder zur Verbesserung einer Kühlleistung. Zudem könnte eine Bodenbearbeitungsgerätevorrichtung auch weitere Einheiten, wie beispielsweise eine Basisstation, eine Freiblaseeinheit, eine, insbesondere zusätzliche, Kühleinheit und/oder einer, insbesondere zusätzlichen, Erhitzungseinheit, umfassen, welche alternativ oder zusätzlich zu einer Kühlung und/oder Erwärmung der Energiespeichereinheit vorgesehen sein können. Auch ist denkbar, einen, insbesondere von einer Bearbeitungseinheit erzeugten und/oder vorteilhaft ausgehenden, Luftstrom zur Kühlung und/oder Erwärmung anderer Bauteile, wie beispielsweise einer Antriebseinheit, einer Elektronikeinheit und/oder einer Steuereinheit, und/oder zur Ausführung weiterführender Tätigkeiten zu verwenden, wie beispielsweise zum Sammeln von Schnittgut.

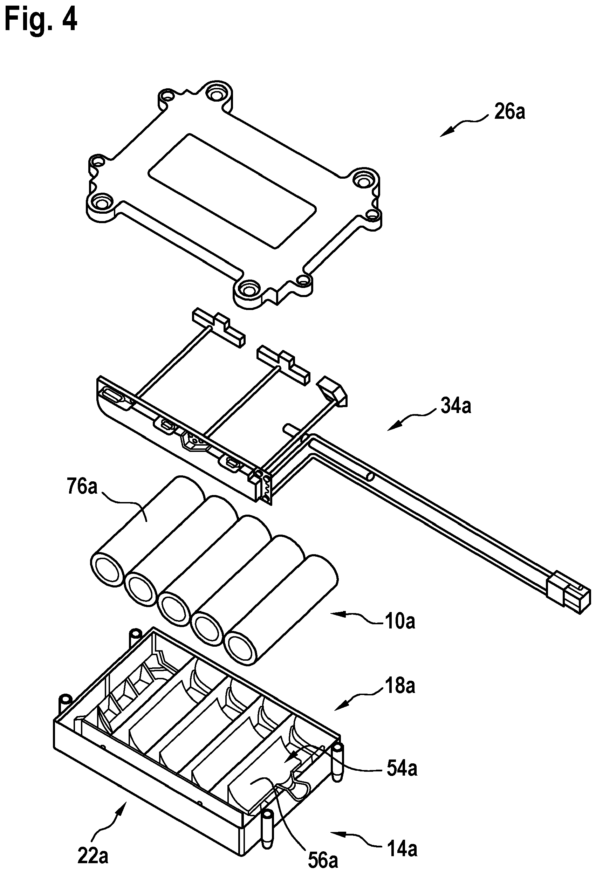

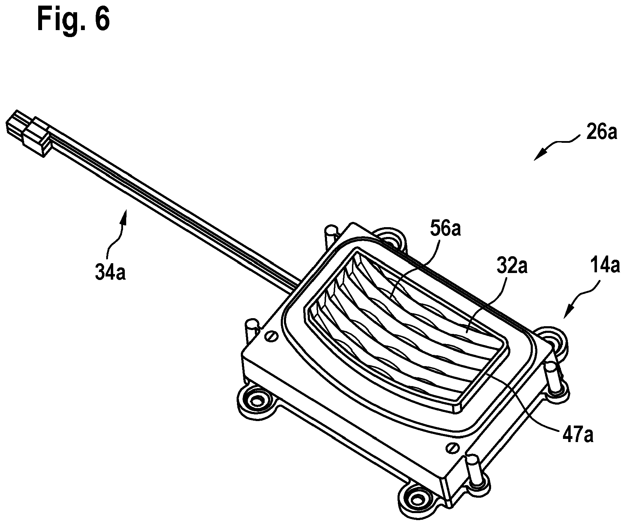

Eine Ausgestaltung der Temperiereinheit 14a wird nun im Folgenden näher erläutert (vgl. auch Figuren 4, 5 und 6). Die Temperiereinheit 14a weist eine Energiespeicheraufnahme 18a auf. Die Energiespeicheraufnahme 18a besteht im vorliegenden Fall zu wenigstens einem Großteil aus Kunststoff. Die Energiespeicheraufnahme 18a ist als Aufnahmegehäuse ausgebildet. Die Energiespeicheraufnahme 18a ist zweiteilig ausgebildet. Die Energiespeicheraufnahme 18a ist dazu vorgesehen, die Energiespeichereinheit 10a aufzunehmen. Die Energiespeicheraufnahme 18a ist dazu vorgesehen, die Energiespeichereinheit 10a zumindest im Wesentlichen fluiddicht, insbesondere wasserdicht, zu lagern, wodurch insbesondere eine effektive Wärmeabfuhr benötigt wird. Die Energiespeicheraufnahme 18a kontaktiert die Energiespeichereinheit 10a. Die Energiespeicheraufnahme 18a und die Energiespeichereinheit 10a weisen dabei eine aneinander angepasste Kontaktfläche 54a und/oder Struktur auf. Die Energiespeicheraufnahme 18a weist eine thermische Verbindung mit der Energiespeichereinheit 10a auf. Die Energiespeicheraufnahme 18a ist dazu vorgesehen, die Energiespeichereinheit 10a in einem Nahbereich der Bearbeitungseinheit 11a anzuordnen. Im vorliegenden Fall ist die Energiespeicheraufnahme 18a zudem dazu vorgesehen, die Energiespeichereinheit 10a zumindest teilweise in der Bodenbearbeitungskammer 20a anzuordnen. Zudem ist die Energiespeicheraufnahme 18a dazu vorgesehen, die Energiespeichereinheit 10a derart auszurichten, dass eine Haupterstreckungsrichtung 70a der Energiespeichereinheit 10a senkrecht zur Vorzugsbewegungsrichtung 44a des Bodenbearbeitungsgeräts 24a ausgerichtet ist. Zudem ist die Haupterstreckungsrichtung 70a der Energiespeichereinheit 10a horizontal bezogen auf einen Untergrund ausgerichtet. Im vorliegenden Fall ist die Haupterstreckungsrichtung 70a der Energiespeichereinheit 10a parallel zur Haupterstreckungsrichtung 68a der Temperiereinheit 14a.

Darüber hinaus umfasst die Temperiereinheit 14a zumindest einen Wärmeübertrager 22a. Der Wärmeübertrager 22a weist eine Mehrzahl an Rippenelementen 32a auf. Im vorliegenden Fall weist der Wärmeübertrager 22a zumindest sieben Rippenelemente 32a auf. Die Rippenelemente 32a sind als Lamellen ausgebildet. Die Rippenelemente 32a sind bogenförmig ausgebildet. Im vorliegenden Fall sind die Rippenelemente 32a kreisbogenförmig ausgebildet, insbesondere entlang einer Hauptströmungsrichtung des Luftstroms 16a. Der Wärmeübertrager 22a und insbesondere die Rippenelemente 32a sind dabei derart ausgerichtet, dass eine Haupterstreckungsrichtung 72a des Wärmeübertragers 22a senkrecht zur Vorzugsbewegungsrichtung 44a des Bodenbearbeitungsgeräts 24a ausgerichtet ist. Zudem ist Haupterstreckungsrichtung 72a des Wärmeübertragers 22a horizontal bezogen auf einen Untergrund ausgerichtet. Im vorliegenden Fall ist die Haupterstreckungsrichtung 72a des Wärmeübertragers 22a parallel zur Haupterstreckungsrichtung 70a der Energiespeichereinheit 10a. Der Wärmeübertrager 22a besteht zudem aus einem korrosionsbeständigen Material. Ferner besteht der Wärmeübertrager 22a g aus einem elektrisch isolierenden Material. Der Wärmeübertrager 22a besteht aus einem Polymer, im vorliegenden Fall insbesondere HDPE. Alternativ ist denkbar, dass ein Wärmeübertrager zumindest teilweise, vorzugsweise zu wenigstens einem Großteil und besonders bevorzugt vollständig, aus einem beliebigen anderen Material besteht, wie beispielsweise einem Verbundwerkstoff, einer Legierung, einer Keramik, einem mit Füllstoffen versetzten Kunststoff und/oder einem Metall. Der Wärmeübertrager 22a ist ferner in einem Nahbereich der Bearbeitungseinheit 11a angeordnet. Darüber hinaus ist der Wärmeübertrager 22a außerhalb des Gerätegehäuses 28a und insbesondere in der Bodenbearbeitungskammer 20a, angeordnet. Der Wärmeübertrager 22a ist in einem Nahbereich der ersten Öffnung 50a angeordnet. Der Wärmeübertrager 22a ist darüber hinaus in dem Luftstrom 16a angeordnet. Ferner ist der Wärmeübertrager 22a mit der Energiespeicheraufnahme 18a gekoppelt. Der Wärmeübertrager 22a ist im vorliegenden Fall einstückig mit der Energiespeicheraufnahme 18a ausgebildet. Zudem weist der Wärmeübertrager 22a eine thermische Verbindung mit der Energiespeichereinheit 10a auf. Im vorliegenden Fall kontaktiert der Wärmeübertrager 22a die Energiespeichereinheit 10a mittels zumindest eines Kontaktelements 56a. Das Kontaktelement 56a erstreckt sich dabei von den Rippenelementen 32a bis zu der Energiespeichereinheit 10a. Der Wärmeübertrager 22a ist dabei zu einem unmittelbaren Wärmetransport und/oder Wärmeaustausch zwischen dem Luftstrom 16a und der Energiespeichereinheit 10a vorgesehen.

Weiterhein weist die Bodenbearbeitungsgerätevorrichtung eine Dämmeinheit 48a auf. Die Dämmeinheit 48a ist in dem Dämmeinheitenaufnahmebereich angeordnet. Die Dämmeinheit 48a ist zwischen der äußeren Gehäuseschale 62a und der inneren Gehäuseschale 64a angeordnet. Die Dämmeinheit 48a besteht aus Glaswolle. Die Dämmeinheit 48a ist dazu vorgesehen, das Gerätegehäuse 28a zumindest teilweise gegenüber einer Umgebung zu dämmen und hierdurch zumindest die Temperiereinheit 14a und die Energiespeichereinheit 10a abzuschirmen, wodurch insbesondere eine zusätzliche Erhitzung der Energiespeichereinheit 10a reduziert werden kann.

Alternativ oder zusätzlich ist denkbar, eine weitere Dämmeinheit zur Dämmung einer Antriebseinheit zu verwenden. Zudem könnte eine Dämmeinheit aus einem beliebigen anderen Material bestehen. Auch ist denkbar, eine Dämmeinheit stoffschlüssig oder mittels einer beliebigen anderen Befestigungsmethode an einem Gerätegehäuse zu befestigen.

Darüber hinaus bildet die Energiespeichereinheit 10a zumindest zusammen mit dem Wärmeübertrager 22a ein Energiespeichermodul 26a (vgl. insbesondere Figur 4). Im vorliegenden Fall bilden die Energiespeichereinheit 10a, die Temperiereinheit 14a, insbesondere der Wärmeübertrager 22a und die Energiespeicheraufnahme 18a, und ein Verbindungselement 34a, welches insbesondere zur Verbindung mit der Elektronikeinheit 40a vorgesehen ist, der Bodenbearbeitungsgerätevorrichtung das Energiespeichermodul 26a.

Alternativ oder zusätzlich ist denkbar, dass eine Temperiereinheit weitere Einheiten umfasst, wie beispielsweise zumindest einen Fluidkanal, zumindest ein Luftleitmittel und/oder zumindest ein Peltierelement, welches vorteilhaft eine thermische Verbindung zu einem, insbesondere von der Bearbeitungseinheit erzeugten und/oder vorteilhaft ausgehenden, Luftstrom und einer Energiespeichereinheit aufweisen kann. Auch könnten eine Energiespeicheraufnahme und/oder eine Wärmeübertrager zumindest teilweise aus einem anderen Material, wie beispielsweise einem Metall, insbesondere Aluminium, bestehen. Zudem ist denkbar, auf eine Energiespeicheraufnahme und/oder auf einen Wärmeübertrager, insbesondere mit mehreren Rippenelementen, vollständig zu verzichten.

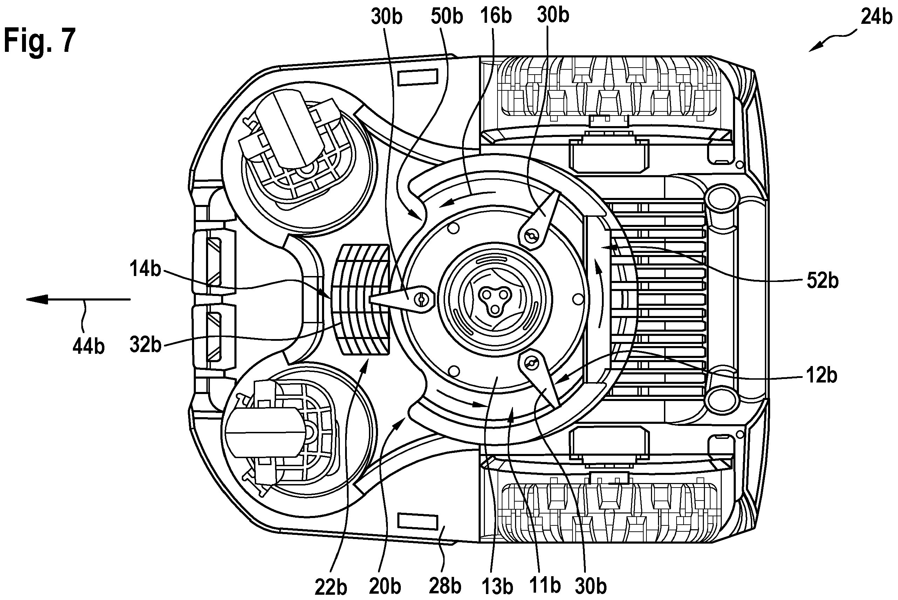

In den Figuren 7 bis 11 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 11 ist der Buchstabe a durch die Buchstaben b bis e ersetzt.

In Figur 7 ist ein weiteres Ausführungsbeispiel der Erfindung gezeigt. Dem Ausführungsbeispiel der Figur 7 ist der Buchstabe b nachgestellt. Das weitere Ausführungsbeispiel der Figur 7 unterscheidet sich von dem vorherigen Ausführungsbeispiel zumindest im Wesentlichen durch eine Ausgestaltung einer Temperiereinheit 14b und einer Bodenbearbeitungskammer 20b.

Im vorliegenden Fall ist die Bodenbearbeitungskammer 20b zumindest teilweise einstückig mit der Temperiereinheit 14b ausgebildet. Dabei ist insbesondere ein Wärmeübertrager 22b der Temperiereinheit 14b einstückig mit der Bodenbearbeitungskammer 20b ausgebildet. Die Bodenbearbeitungskammer 20b besteht dabei aus einem Material, welches eine Wärmeleitfähigkeit von etwa 50 W / mK aufweist. Im vorliegenden Fall besteht die Bodenbearbeitungskammer 20b aus Stahl. Zudem ist im vorliegenden Fall denkbar, auf einen Wärmeübertrager 22b mit Rippenelementen 32b zu verzichten.

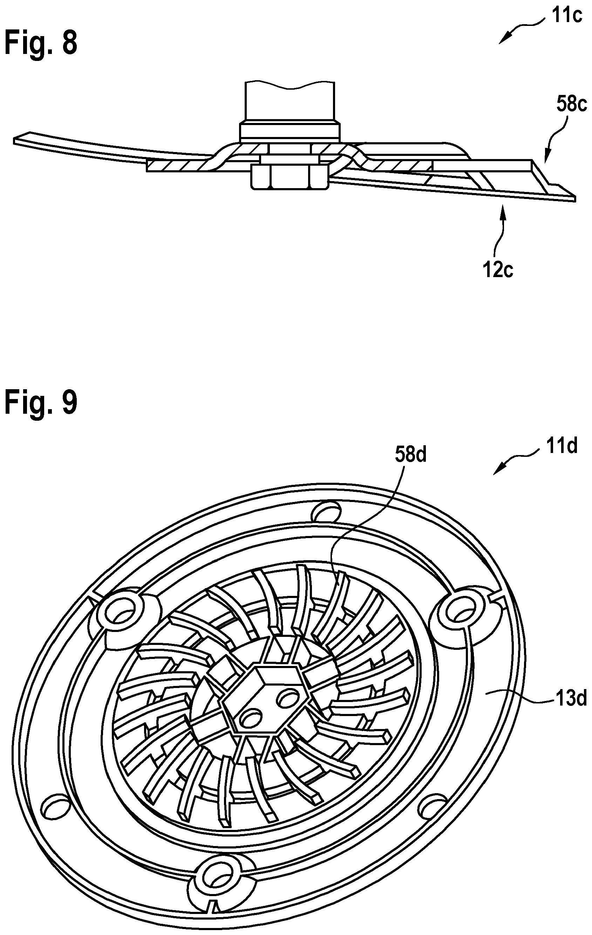

In Figur 8 ist ein weiteres Ausführungsbeispiel der Erfindung gezeigt. Dem Ausführungsbeispiel der Figur 8 ist der Buchstabe c nachgestellt. Das weitere Ausführungsbeispiel der Figur 8 unterscheidet sich von den vorherigen Ausführungsbeispielen zumindest im Wesentlichen durch eine Bearbeitungseinheit 11c.

Im vorliegenden Fall umfasst eine Temperiereinheit 14c ein Luftleitmittel 58c. Das Luftleitmittel 58c ist einstückig mit der Bearbeitungseinheit 11c, im vorliegenden Fall insbesondere einem Bearbeitungswerkzeug 12c der Bearbeitungseinheit 11c, ausgebildet. Das Luftleitmittel 58c entspricht einer aerodynamischen Profilierung der Bearbeitungseinheit 11c. Das Luftleitmittel 58c ist wenigstens zu einer gezielten Führung eines, insbesondere von der Bearbeitungseinheit 11c erzeugten und von der Bearbeitungseinheit 11c ausgehenden, Luftstroms 16c vorgesehen. Im vorliegenden Fall ist das Luftleitmittel 58c zu einer Verbesserung einer Kühlleistung vorgesehen.

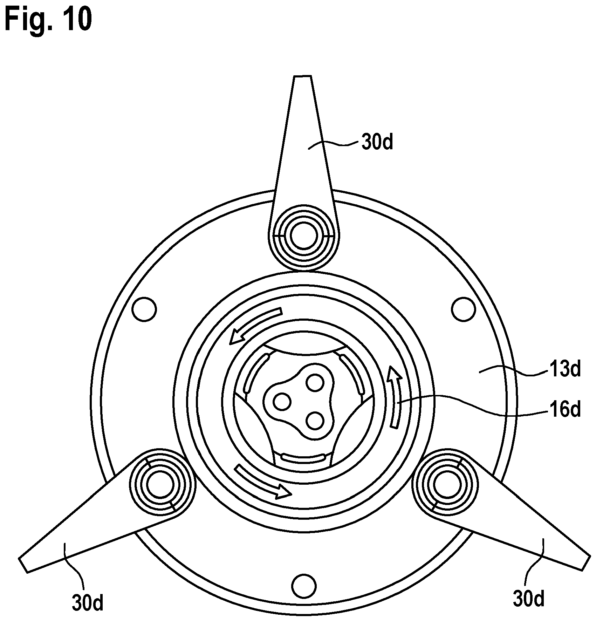

In den Figuren 9 und 10 ist ein weiteres Ausführungsbeispiel der Erfindung gezeigt. Dem Ausführungsbeispiel der Figuren 9 und 10 ist der Buchstabe d nachgestellt. Das weitere Ausführungsbeispiel der Figuren 9 und 10 unterscheidet sich von den vorherigen Ausführungsbeispielen zumindest im Wesentlichen durch eine Bearbeitungseinheit 11d.

In diesem Fall umfasst eine Temperiereinheit 14d eine Vielzahl an Luftleitmitteln 58d. Die Luftleitmittel 58d sind einstückig mit der Bearbeitungseinheit 11d, im vorliegenden Fall insbesondere einer Bearbeitungswerkzeugaufnahme 13d der Bearbeitungseinheit 11d, ausgebildet. Die Luftleitmittel 58d sind als Flügelelemente ausgebildet. Die Luftleitmittel 58c sind konzentrisch bezüglich einer Drehachse der Bearbeitungseinheit 11d angeordnet. Die Luftleitmittel 58d erstrecken sich dabei radial nach außen. Die Luftleitmittel 58d sind bogenförmig ausgebildet und sind insbesondere in Drehrichtung gebogen. Das Luftleitmittel 58d ist wenigstens zu einer gezielten Führung eines, insbesondere von der Bearbeitungseinheit 11d erzeugten und von der Bearbeitungseinheit 11d ausgehenden, Luftstroms 16d vorgesehen. Im vorliegenden Fall ist das Luftleitmittel 58d zu einer Verstärkung des Luftstroms 16d vorgesehen.

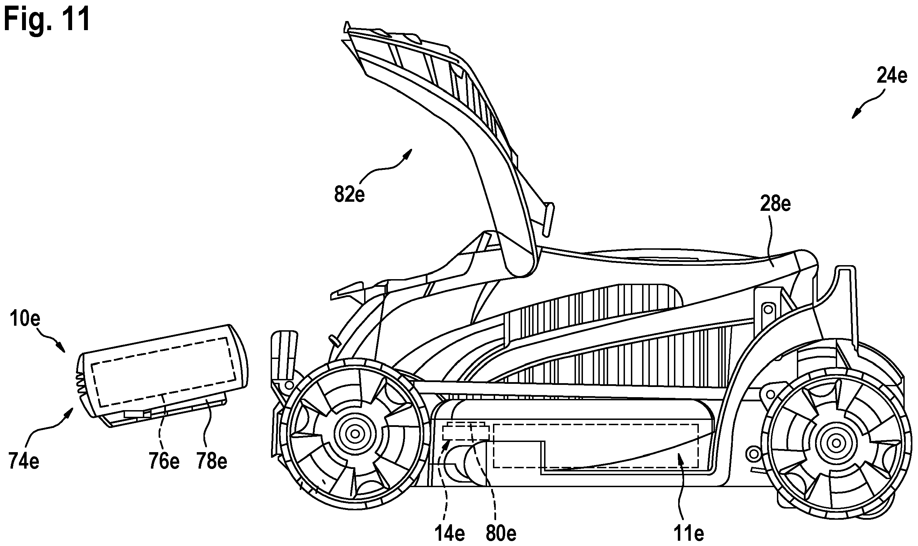

In Figur 11 ist ein weiteres Ausführungsbeispiel der Erfindung gezeigt. Dem Ausführungsbeispiel der Figur 11 ist der Buchstabe e nachgestellt. Das weitere Ausführungsbeispiel der Figur 11 unterscheidet sich von den vorherigen Ausführungsbeispielen zumindest im Wesentlichen durch eine Energiespeichereinheit 10e.

Im vorliegenden Fall weist ein Gerätegehäuse 28e eine Öffnungsklappe 82e auf. Zudem ist die Energiespeichereinheit 10e, insbesondere mittels der Öffnungsklappe 82e, wechselbar und/oder austauschbar ausgebildet. Die Energiespeichereinheit 10e umfasst ein Energiespeichergehäuse 74e und wenigstens eine Energiezelle 76e. Die Energiezelle 76e ist innerhalb des Energiespeichergehäuses 74e angeordnet. Darüber hinaus weist die Energiespeichereinheit 10e eine erste Schnittstelle 78e, insbesondere zur Verbindung mit einer Temperiereinheit 14e, auf. Die Temperiereinheit 14e ist innerhalb des Gerätegehäuses 28e fixiert. Die Temperiereinheit 14e weist eine zweite Schnittstelle 80e zur Anbindung der Energiespeichereinheit 10e auf. Die zweite Schnittstelle 80 entspricht im vorliegenden Fall einer Energiespeicheraufnahme 18e, welche insbesondere dazu vorgesehen ist, die Energiespeichereinheit 10e zumindest teilweise aufzunehmen und wenigstens teilweise in einem Nahbereich einer Bearbeitungseinheit 11e anzuordnen. Die zweite Schnittstelle 80e ist zu der ersten Schnittstelle 78e korrespondierend ausgebildet. Im vorliegenden Fall ist die erste Schnittstelle 78e und die zweite Schnittstelle 80e zu einer formschlüssigen Verbindung der Energiespeichereinheit 10e mit der Temperiereinheit 14e vorgesehen. Alternativ ist auch denkbar, dass zumindest ein Element einer Temperiereinheit mit der Energiespeichereinheit verbunden und/oder einstückig ausgebildet sein könnte und die Energiespeichereinheit und das Element der Temperiereinheit zusammen wechselbar und/oder austauschbar sind. In diesem Fall könnte die Energiespeichereinheit und/oder das Element der Temperiereinheit eine erste Schnittstelle zur Verbindung mit einer zweiten Schnittstelle eines weiteren Elements der Temperiereinheit umfassen. Auch ist denkbar, zu einer Verbesserung eines thermischen Kontakts, zumindest ein Kontaktierungselement zu verwenden, wie beispielsweise eine Wärmeleitpaste, ein wärmeleitendes Gel und/oder ein elastisches Element mit wärmeleitenden Eigenschaften.

## Patentansprüche

1. Bodenbearbeitungsgerätevorrichtung mit zumindest einer Energiespeichereinheit (10a; 10e), mit zumindest einer beweglich antreibbaren Bearbeitungseinheit (11a; 11b; 11c; 11d; 11e), und mit einer Temperiereinheit (14a; 14b; 14c; 14d; 14e), welche dazu vorgesehen ist, einen von der Bearbeitungseinheit (11a; 11b; 11c; 11d; 11e) erzeugten Luftstrom (16a; 16b, 16d) für einen Wärmetransport von der Energiespeichereinheit (10a; 10e) oder für einen Wärmetransport zu der Energiespeichereinheit (10a; 10e) zu verwenden, **dadurch gekennzeichnet, dass** eine Strömungsrichtung des Luftstroms (16a; 16b, 16d) dabei zumindest im Wesentlichen von der Bearbeitungseinheit (11a; 11b; 11c; 11d; 11e) in Richtung der Energiespeichereinheit (10a; 10e) gerichtet ist.

2. Bodenbearbeitungsgerätevorrichtung nach Anspruch 1, **dadurch gekennzeichnet, dass** die Temperiereinheit (14a; 14b; 14c; 14d; 14e) wenigstens zu einer Kühlung der Energiespeichereinheit (10a; 10e) vorgesehen ist.

3. Bodenbearbeitungsgerätevorrichtung nach einem der vorhergehenden Ansprüche, **dadurch gekennzeichnet, dass** die Temperiereinheit (14a; 14b; 14c; 14d; 14e) zumindest eine Energiespeicheraufnahme (18a; 18e) aufweist, welche dazu vorgesehen ist, die Energiespeichereinheit (10a; 10e) zumindest teilweise aufzunehmen und wenigstens teilweise in einem Nahbereich der Bearbeitungseinheit (11a; 11e) anzuordnen.

4. Bodenbearbeitungsgerätevorrichtung nach einem der vorhergehenden Ansprüche, **gekennzeichnet durch** zumindest eine Bodenbearbeitungskammer (20a; 20b), in welcher die Bearbeitungseinheit (11a; 11b; 11c; 11d; 11e) zu wenigstens einem Großteil und die Temperiereinheit (14a; 14b; 14c; 14d; 14e) zumindest teilweise angeordnet ist und/oder die Temperiereinheit (14a; 14b; 14c; 14d; 14e) die Bodenbearbeitungskammer (20a; 20b) unmittelbar kontaktiert und/oder berührt.

5. Bodenbearbeitungsgerätevorrichtung nach Anspruch 3, **dadurch gekennzeichnet, dass** die Energiespeichereinheit (10a; 10e) zumindest teilweise in der Bodenbearbeitungskammer (20a; 20b) angeordnet ist.

6. Bodenbearbeitungsgerätevorrichtung nach einem der vorhergehenden Ansprüche, **gekennzeichnet durch** zumindest eine Bodenbearbeitungskammer (20a; 20b), welche zumindest eine Öffnung (50a, 52a; 50b, 52b) definiert, welche insbesondere zu einer Zufuhr und/oder Abfuhr zumindest eines Teils eines Bearbeitungsguts zur Bearbeitungseinheit (11a; 11b; 11c; 11d; 11e) oder von der Bearbeitungseinheit (11a; 11b; 11c; 11d; 11e) vorgesehen ist, und die Temperiereinheit (14a; 14b; 14c; 14d; 14e) zumindest teilweise in einem Nahbereich der Öffnung (50a, 52a; 50b, 52b) angeordnet ist.

7. Bodenbearbeitungsgerätevorrichtung nach einem der vorhergehenden Ansprüche, **gekennzeichnet durch** zumindest eine Bodenbearbeitungskammer (20b), mit welcher die Temperiereinheit (14b) zumindest teilweise einstückig ausgebildet ist.

8. Bodenbearbeitungsgerätevorrichtung nach einem der vorhergehenden Ansprüche, **dadurch gekennzeichnet, dass** die Temperiereinheit (14a; 14b; 14c; 14d; 14e), bezogen auf eine Vorzugsbewegungsrichtung (44a; 44b), zumindest teilweise vor der Bearbeitungseinheit (11a; 11b; 11c; 11d; 11e) angeordnet ist.

9. Bodenbearbeitungsgerätevorrichtung nach einem der vorhergehenden Ansprüche, **dadurch gekennzeichnet, dass** die Temperiereinheit (14e) zumindest eine Schnittstelle (80e) zur Anbindung der Energiespeichereinheit (10e) aufweist, in welche die Energiespeichereinheit (10e) wechselbar und/oder austauschbar einführbar ist.

10. Bodenbearbeitungsgerätevorrichtung nach einem der vorhergehenden Ansprüche, **gekennzeichnet durch** wenigstens ein Gerätegehäuse (28a; 28b; 28e) und wenigstens eine Dichteinheit (46a), wobei die Temperiereinheit (14a; 14b; 14c; 14d; 14e) zumindest teilweise außerhalb des Gerätegehäuses (28a; 28b; 28e) angeordnet ist und die Dichteinheit (46a) dazu vorgesehen ist, eine Durchtrittsstelle (66a) der Temperiereinheit (14a; 14b; 14c; 14d; 14e) durch das Gerätegehäuse (28a; 28b; 28e) zumindest im Wesentlichen fluiddicht zu verschließen.

11. Bodenbearbeitungsgerätevorrichtung nach einem der vorhergehenden Ansprüche, **gekennzeichnet durch** wenigstens ein, insbesondere als Außengehäuse ausgebildetes, Gerätegehäuse (28a; 28b; 28e) und zumindest eine Dämmeinheit (48a), welche dazu vorgesehen ist, das Gerätegehäuse (28a; 28b; 28e) zumindest teilweise gegenüber einer Umgebung zu dämmen.

12. Bodenbearbeitungsgerät (24a; 24b; 24e), insbesondere autonomes Bodenbearbeitungsgerät, insbesondere autonomer Rasenmäher, mit zumindest einer Bodenbearbeitungsgerätevorrichtung nach einem der vorhergehenden Ansprüche.

13. Verwendung eines Energiespeichermodul (26a) in einer Bodenbearbeitungsgerätevorrichtung, mit einer Energiespeichereinheit (10a; 10e) und wenigstens einem Wärmeübertrager (22a), welcher in zumindest einem Betriebszustand zumindest teilweise in einem, von einer Bearbeitungseinheit (11a; 11b; 11c; 11d; 11e) erzeugten Luftstrom (16a; 16b, 16d) angeordnet ist, **dadurch gekennzeichnet, dass** eine Strömungsrichtung des Luftstroms (16a; 16b, 16d) zumindest im Wesentlichen von der Bearbeitungseinheit (11a; 11b; 11c; 11d; 11e) in Richtung der Energiespeichereinheit (10a; 10e) gerichtet ist und der Wärmeüberträger (22a) zu einem Wärmeaustausch zwischen dem Luftstrom (16a; 16b, 16d) und der Energiespeichereinheit (10a; 10e) vorgesehen ist.

14. Verfahren zum Betrieb einer Bodenbearbeitungsgerätevorrichtung, insbesondere nach einem der Ansprüche 1 bis 12, welche zumindest eine Energiespeichereinheit (10a; 10e) und zumindest eine beweglich antreibbare Bearbeitungseinheit (11a; 11b; 11c; 11d; 11e) umfasst, durch welche in zumindest einem Betriebszustand wenigstens ein Luftstrom (16a; 16b, 16d) erzeugt wird, wobei der Luftstrom (16a; 16b, 16d) zu einem Wärmetransport von der Energiespeichereinheit (10a; 10e) oder zu der Energiespeichereinheit (10a; 10e) verwendet wird, **dadurch gekennzeichnet, dass** eine Strömungsrichtung des Luftstroms (16a; 16b, 16d) zumindest im Wesentlichen von der Bearbeitungseinheit (11a; 11b; 11c; 11d; 11e) in Richtung der Energiespeichereinheit (10a; 10e) gerichtet ist.

## Claims

1. Ground-preparation appliance device having at least an energy-storage unit (10a; 10e), having at least a movably drivable preparation unit (11a; 11b; 11c; 11d; 11e), and having a temperature-control unit (14a; 14b; 14c; 14d; 14e) which is provided for using an air flow (16a; 16b, 16d) that is generated by the preparation unit (11a; 11b; 11c; 11d; 11e) for transmitting heat from the energy-storage unit (10a; 10e) or for transmitting heat to the energy-storage unit (10a; 10e), **characterized in that** a flow direction of the air flow (16a; 16b, 16d) herein is at least substantially directed from the preparation unit (11a; 11b; 11c; 11d; 11e) toward the energy-storage unit (10a; 10e).

2. Ground-preparation appliance device according to Claim 1, **characterized in that** the temperature-control unit (14a; 14b; 14c; 14d; 14e) is provided for at least cooling the energy-storage unit (10a; 10e).

3. Ground-preparation appliance device according to one of the preceding claims, **characterized in that** the temperature-control unit (14a; 14b; 14c; 14d; 14e) has at least an energy-storage receptacle (18a; 18e) which is provided for at least in part receiving the energy-storage unit (10a; 10e) and for at least in part disposing the latter in a vicinity of the preparation unit (11a; 11e).

4. Ground-preparation appliance device according to one of the preceding claims, **characterized by** at least a ground-preparation chamber (20a; 20b) in which the preparation unit (11a; 11b; 11c; 11d; 11e) at least to a major part and the temperature-control unit (14a; 14b; 14c; 14d; 14e) at least in part, are disposed, and/or the temperature-control unit (14a; 14b; 14c; 14d; 14e) contacts and/or touches the ground-preparation chamber (20a; 20b) directly.

5. Ground-preparation appliance device according to Claim 3, **characterized in that** the energy-storage unit (10a; 10e) is at least in part disposed in the ground-preparation chamber (20a; 20b).

6. Ground-preparation appliance device according to one of the preceding claims, **characterized by** at least a ground-preparation chamber (20a; 20b) which defines at least an opening (50a, 52a; 50b, 52b) which is provided in particular for infeeding and/or outfeeding at least a part of a preparation material to the preparation unit (11a; 11b; 11c; 11d; 11e) and/or from the preparation unit (11a; 11b; 11c; 11d; 11e), the temperature-control unit (14a; 14b; 14c; 14d; 14e) being at least in part disposed in a vicinity of the opening (50a, 52a; 50b, 52b).

7. Ground-preparation appliance device according to one of the preceding claims, **characterized by** at least a ground-preparation chamber (20b) by way of which the temperature-control unit (14b) is at least in part integrally configured.

8. Ground-preparation appliance device according to one of the preceding claims, **characterized in that** the temperature-control unit (14a; 14b; 14c; 14d; 14e) in relation to a preferred direction of movement (44a; 44b) is at least in part disposed ahead of the preparation unit (11a; 11b; 11c; 11d; 11e).

9. Ground-preparation appliance device according to one of the preceding claims, **characterized in that** the temperature-control unit (14e) has at least an interface (80e) for coupling to the energy-storage unit (10e), into which interface (80e) the energy-storage unit (10e) is interchangeably and/or replaceably introducible.

10. Ground-preparation appliance device according to one of the preceding claims, **characterized by** at least one appliance housing (28a; 28b; 28e) and at least one sealing unit (46a), wherein the temperature-control unit (14a; 14b; 14c; 14d; 14e) is at least in part disposed outside the appliance housing (28a; 28b; 28e), and the sealing unit (46a) is provided in order for a passage point (66a) of the temperature-control unit (14a; 14b; 14c; 14d; 14e) through the appliance housing (28a; 28b; 28e) to be closed off at least in a substantially fluid-tight manner.

11. Ground-preparation appliance device according to one of the preceding claims, **characterized by** at least one appliance housing (28a; 28b; 28e) which is configured, in particular, as an external housing, and by at least an insulating unit (48a) which is provided in order for the appliance housing (28a; 28b; 28e) to be at least in part insulated in relation to an environment.

12. Ground-preparation appliance (24a; 24b; 24e), in particular an autonomous ground-preparation appliance, in particular an autonomous lawn mower, having at least a ground-preparation appliance device according to one of the preceding claims.

13. Use of an energy-storage module (26a) in a ground-preparation appliance device, having an energy-storage unit (10a; 10e) and at least one thermal transmitter (22a) which in at least an operating state is at least in part disposed in an air flow (16a; 16b, 16d) which is generated by a preparation unit (11a; 11b; 11c; 11d; 11e), **characterized in that** a flow direction of the air flow (16a; 16b, 16d) is at least substantially directed from the preparation unit (11a; 11b; 11c; 11d; 11e) toward the energy-storage unit (10a; 10e), and the thermal transmitter (22a) is provided for exchanging heat between the air flow (16a; 16b, 16d) and the energy-storage unit (10a; 10e).

14. Method for operating a ground-preparation appliance device, in particular according to one of Claims 1 to 12, which device comprises at least an energy-storage unit (10a; 10e) and at least a movably drivable preparation unit (11a; 11b; 11c; 11d; 11e) by way of which in at least an operating state at least one air flow (16a; 16b, 16d) is generated, wherein the air flow (16a; 16b, 16d) is used for transmitting heat from the energy-storage unit (10a; 10e) or to the energy-storage unit (10a; 10e), **characterized in that** a flow direction of the air flow (16a; 16b, 16d) at least substantially is directed from the preparation unit (11a; 11b; 11c; 11d; 11e) toward the energy-storage unit (10a; 10e).

## Revendications

1. Dispositif de travail du sol équipé d'au moins une unité d'accumulateur d'énergie (10a; 10e), avec au moins une unité de travail pouvant être entraînée en mouvement (11a; 11b; 11c; 11d; 11e), et avec une unité d'équilibrage de la température (14a; 14b; 14c; 14d; 14e), qui est prévue pour utiliser un courant d'air (16a; 16b, 16d) produit par l'unité de travail (11a; 11b; 11c; 11d; 11e) pour un transport de chaleur à partir de l'unité d'accumulateur d'énergie (10a; 10e) ou pour un transport de chaleur vers l'unité d'accumulateur d'énergie (10a; 10e), **caractérisé en ce qu'**une direction d'écoulement du courant d'air (16a; 16b, 16d) est en l'occurrence dirigée au moins essentiellement de l'unité de travail (11a; 11b; 11c; 11d; 11e) en direction de l'unité d'accumulateur d'énergie (10a; 10e).

2. Dispositif de travail du sol selon la revendication 1, **caractérisé en ce que** l'unité d'équilibrage de la température (14a; 14b; 14c; 14d; 14e) est prévue au moins pour un refroidissement de l'unité d'accumulateur d'énergie (10a; 10e).

3. Dispositif de travail du sol selon l'une quelconque des revendications précédentes, **caractérisé en ce que** l'unité d'équilibrage de la température (14a; 14b; 14c; 14d; 14e) présente au moins un logement d'accumulateur d'énergie (18a; 18e), qui est prévu pour contenir au moins en partie l'unité d'accumulateur d'énergie (10a; 10e) et la disposer au moins en partie à proximité de l'unité de traitement (11a; 11e).

4. Dispositif de travail du sol selon l'une quelconque des revendications précédentes, **caractérisé par** au moins une chambre de travail du sol (20a; 20b), dans laquelle sont disposées l'unité de travail du sol (11a; 11b; 11c; 11d; 11e) au moins pour une grande partie et l'unité d'équilibrage de la température (14a; 14b; 14c; 14d; 14e) au moins en partie et/ou l'unité d'équilibrage de la température (14a; 14b; 14c; 14d; 14e) contacte et/ou touche directement la chambre de travail du sol (20a; 20b).

5. Dispositif de travail du sol selon la revendication 3, **caractérisé en ce que** l'unité d'accumulateur d'énergie (10a; 10e) est disposée au moins en partie dans la chambre de travail du sol (20a; 20b).

6. Dispositif de travail du sol selon l'une quelconque des revendications précédentes, **caractérisé par** au moins une chambre de travail du sol (20a; 20b), qui définit au moins une ouverture (50a, 52a; 50b, 52b), qui est prévue en particulier pour une arrivée et/ou une évacuation d'au moins une partie d'une matière de travail à l'unité de travail (11a; 11b; 11c; 11d; 11e) ou de l'unité de travail (11a; 11b; 11c; 11d; 11e), et l'unité d'équilibrage de la température (14a; 14b; 14c; 14d; 14e) est disposée au moins en partie à proximité de l'ouverture (50a, 52a; 50b, 52b).

7. Dispositif de travail du sol selon l'une quelconque des revendications précédentes, **caractérisé par** au moins une chambre de travail du sol (20b), avec laquelle l'unité d'équilibrage de la température (14b) est réalisée au moins en partie en une seule pièce.

8. Dispositif de travail du sol selon l'une quelconque des revendications précédentes, **caractérisé en ce que** l'unité d'équilibrage de la température (14a; 14b; 14c; 14d; 14e) est disposée, par rapport à une direction de mouvement préférée (44a; 44b), au moins en partie avant l'unité de travail (11a; 11b; 11c; 11d; 11e).

9. Dispositif de travail du sol selon l'une quelconque des revendications précédentes, **caractérisé en ce que** l'unité d'équilibrage de la température (14e) présente au moins une interface (80e) pour la connexion de l'unité d'accumulateur d'énergie (10e), dans laquelle l'unité d'accumulateur d'énergie (10e) peut être introduite de manière échangeable et/ou remplaçable.

10. Dispositif de travail du sol selon l'une quelconque des revendications précédentes, **caractérisé par** au moins un boîtier d'appareil (28a; 28b; 28e) et au moins une unité d'étanchéité (46a), dans lequel l'unité d'équilibrage de la température (14a; 14b; 14c; 14d; 14e) est disposée au moins en partie à l'extérieur du boîtier d'appareil (28a; 28b; 28e) et l'unité d'étanchéité (46a) est prévue pour fermer de façon au moins essentiellement étanche au fluide un point de passage (66a) de l'unité d'équilibrage de la température (14a; 14b; 14c; 14d; 14e) à travers le boîtier d'appareil (28a; 28b; 28e).

11. Dispositif de travail du sol selon l'une quelconque des revendications précédentes, **caractérisé par** au moins un boîtier d'appareil (28a; 28b; 28e), réalisé en particulier sous forme de boîtier extérieur, et au moins une unité d'isolation (48a), qui est prévue pour isoler le boîtier d'appareil (28a; 28b; 28e) au moins en partie par rapport à l'environnement.

12. Appareil de travail du sol (24a; 24b; 24e), en particulier appareil autonome de travail du sol, en particulier tondeuse à gazon autonome, équipé d'au moins un dispositif de travail du sol selon l'une quelconque des revendications précédentes.

13. Utilisation d'un module d'accumulateur d'énergie (26a) dans un dispositif de travail du sol, équipé d'une unité d'accumulateur d'énergie (10a; 10e) et d'au moins un échangeur de chaleur (22a), qui dans au moins un état de fonctionnement est disposé au moins en partie dans un courant d'air (16a; 16b, 16d) produit par une unité de travail (11a; 11b; 11c; 11d; 11e), **caractérisée en ce qu'**une direction d'écoulement du courant d'air (16a; 16b, 16d) est dirigée au moins essentiellement de l'unité de travail (11a; 11b; 11c; 11d; 11e) en direction de l'unité d'accumulateur d'énergie (10a; 10e) et l'échangeur de chaleur (22a) est prévu pour un échange de chaleur entre le courant d'air (16a; 16b, 16d) et l'unité d'accumulateur d'énergie (10a; 10e).

14. Procédé de fonctionnement d'un dispositif de travail du sol, en particulier selon l'une quelconque des revendications 1 à 12, qui comprend au moins une unité d'accumulateur d'énergie (10a; 10e) et au moins une unité de travail pouvant être entraînée en mouvement (11a; 11b; 11c; 11d; 11e), par laquelle dans au moins un état de fonctionnement on produit au moins un courant d'air (16a; 16b, 16d), dans lequel on utilise le courant d'air (16a; 16b, 16d) pour un transport de chaleur à partir de l'unité d'accumulateur d'énergie (10a; 10e) ou vers l'unité d'accumulateur d'énergie (10a; 10e), **caractérisé en ce que** la direction d'écoulement du courant d'air (16a; 16b, 16d) est dirigée au moins essentiellement de l'unité de travail (11a; 11b; 11c; 11d; 11e) en direction de l'unité d'accumulateur d'énergie (10a; 10e).
